(19) **Europäisches Patentamt / European Patent Office / Office européen des brevets**

(11) **EP 1 489 552 B1**

(12) # EUROPÄISCHE PATENTSCHRIFT

(45) Veröffentlichungstag und Bekanntmachung des Hinweises auf die Patenterteilung:
**02.05.2007 Patentblatt 2007/18**

(51) Int Cl.:
**G06K 9/32** *(2006.01)* **G08G 1/04** *(2006.01)*
**G06T 7/00** *(2006.01)*

(21) Anmeldenummer: **04090224.9**

(22) Anmeldetag: **08.06.2004**

(54) **Verfahren und Vorrichtung zur Verbesserung der Erkennung und/oder Wiedererkennung von Objekten in der Bildverarbeitung**

Method and apparatus for improving the identification and/or re-identification of objects in image processing

Procédé et appareil pour améliorer la reconnaissance initiale ou à nouveau d'objets dans le traitement d'images

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.06.2003 DE 10328814**

(43) Veröffentlichungstag der Anmeldung:
**22.12.2004 Patentblatt 2004/52**

(73) Patentinhaber: **Deutsches Zentrum für Luft- und Raumfahrt e.V.**
**51147 Köln (DE)**

(72) Erfinder: **Woesler, Richard**
**12489 Berlin (DE)**

(74) Vertreter: **Effert, Bressel und Kollegen Patentanwälte**
**Radickestrasse 48**
**12489 Berlin (DE)**

(56) Entgegenhaltungen:
**WO-A-97/16807      US-A- 5 161 107**
**US-A- 5 467 402**

• **N.N.: "Traffic Monitor" NASA SPINOFF 1995, [Online] 1996, XP002296924 Gefunden im Internet: URL:http:// vesuvius.jsc.nasa.gov/er/seh/pg 64s95.html> [gefunden am 2004-09-17]**

• **N.N.: "Foreword, Introduction, Publications" NASA SPINOFF 1996, [Online] 1997, XP002296925 Gefunden im Internet: URL:http: //www.sti.nasa.gov/tto/spinoff199 6/1.html, 2.html,74.html> [gefunden am 2004-09-17]**

• **WOESLER R: "Fast extraction of traffic parameters and reidentification of vehicles from video data" PROC. INT. IEEE CONF. ON INTELLIGENT TRANSPORTATION SYSTEMS, Bd. 1, 12. Oktober 2003 (2003-10-12), Seiten 774-778, XP010673568 SHANGHAI, CHINA**

• **PATENT ABSTRACTS OF JAPAN Bd. 2002, Nr. 05, 3. Mai 2002 (2002-05-03) & JP 2002 024830 A (NEC CORP), 25. Januar 2002 (2002-01-25)**

• **KOGUT G T ET AL: "Maintaining the identity of multiple vehicles as they travel through a video network" PROC. INT. IEEE. CONF. ON INTELLIGENT TRANSPORTATION SYSTEMS, 25. August 2001 (2001-08-25), Seiten 756-761, XP010555868 OAKLAND, CA, USA,**

• **COIFMAN B ET AL: "Vehicle reidentification and travel time measurement, part 1: congested freeways" PROC. INT. IEEE. CONF. ON INTELLIGENT TRANSPORTATION SYSTEMS, 25. August 2001 (2001-08-25), Seiten 138-143, XP010555759 OAKLAND, CA, USA**

• **COIFMAN B: "Vehicle reidentification and travel time measurement, part II: uncongested freeways and the onset of congestion" PROC. INT. IEEE CONF. ON INTELLIGENT TRANSPORTATION SYSTEMS, 25. August 2001 (2001-08-25), Seiten 144-149, XP010555760 OAKLAND, CA, USA**

EP 1 489 552 B1

**Beschreibung**

Die Erfindung bezieht sich auf ein Verfahren und eine Vorrichtung zur Verbesserung der Erkennung und/oder Wiedererkennung von Objekten in der Bildverarbeitung.

Eine Erkennung und/oder Wiedererkennung von Objekten in der Bildverarbeitung ist beispielsweise für eine Verkehrsüberwachung, eine Sicherheitsüberwachung von Regionen und/oder eine kartographische Erfassung von Gebieten mittels Kamerabilder erforderlich. Aufgrund von Kosten sollte die Anzahl der Kameras für eine Überwachung gering gehalten werden. Die Anzahl der Kameras zum Überwachen des Verkehrs einer Region ist durch eine Wiedererkennung von Objekten reduzierbar. Objekte, die den Bereich einer Kamera verlassen und in den Bereich einer entfernteren z.B. an der nächsten Kreuzung gelangen und dort wieder erkannt werden, ermöglichen eine Reisezeitermittlung und eine Schätzung des Verkehrs auf dem dazwischen liegenden nicht-überwachten Bereich.

Für eine Verkehrsüberwachung können mit Hilfe der Erkennung und/oder Wiedererkennung anonymisierte Routeninformationen gewonnen werden, durch die wichtige Kenngrößen des Verkehrs erfassbar sind. Diese Informationen sind beispielsweise für eine Verkehrssimulation und/oder ein automatisiertes Verkehrsleitsystem von Interesse. Die Qualität der Informationen ist dabei abhängig von einer Erfolgsrate der Erkennung und/oder Wiedererkennung.

Speziell im Verkehr ist es denkbar, Fahrzeuge anhand des Kennzeichens wieder zu erkennen. Bei einer Kennzeichenerkennung auf allen Fahrspuren einer Kreuzung ist jedoch eine große Anzahl an Kameras nötig, was einen Kostenfaktor darstellt. Eine Kennzeichenerkennung ist daher an bestimmten Stellen beispielsweise für eine Mauterfassung sinnvoll, weniger für eine flächendeckende Verkehrsbeobachtung.

Für eine Verkehrsbeobachtung ist beispielsweise aus "Untersuchungen zu einer systematischen Leistungssteigerung in der modellbasierten Bildfolgenauswertung" (H. Leuck, Berichte aus der Informatik, Shaker Verlag, Aachen 2001) bekannt, Hypothesen über die Art und Position eines Objektes aufzustellen, wobei für die Erkennung die einzelnen Hypothesen durch geeignete Verfahren ausgewertet werden. Weiter ist es bekannt, dass durch Vergleich von extrahierten Objektmerkmalen bei Objekten, die zu verschiedenen Zeiten an verschiedenen Orten aufgenommen werden, eine Wiedererkennung von Objekten möglich ist (R. Woesler, Fast extraction of traffic data and reidentification of vehicles from video data. IEEE 6th International Conference On Intelligent Transportation Systems, Shanghai, China, Conference Proceedings, IEEE Catalog Number: 03TH8708C, ISBN 0-7803-8126-2, 2003). Dabei werden für eine Steigerung der Erfolgsrate einer Objektwiedererkennung zu den ObjektHypothesen weitere Merkmale wie Kamerapixelwerte ermittelt. Die Ermittlung erfolgt beispielsweise mit einer Farbmatrixkamera. Dennoch ist die Erfolgsrate der Erkennung und/oder Wiedererkennung nicht optimal.

Aus der JP 2002 02 48 30 ist eine Vorrichtung zum Bildvergleich bekannt, um Personen mittels eines einzigen Bildes wieder zu erkennen, bei dem die Reflexionen anhand der Beleuchtung geschätzt werden. Bei solchen Aufnahmen ist eine Lichtquelle üblich, die etwa aus der Richtung der Kamera auf die Person scheint, da sonst störende Schatten der Person selbst im Bild sind. Reflexionen der Lichtquelle vom Gesicht werden dann in der Kamera ausgewertet.

Aus der WO 97/16807 bzw. der Fachpublikation "Nasa Spinnoff 1995, Traffic Monitor" sind jeweils Verfahren bekannt, bei denen Reflexionen aufgrund einer feuchten Straße eliminiert werden, indem beispielsweise der konstante Hintergrund ausgeblendet wird, also nur sich bewegende Objekte betrachtet werden.

Aus der Fachpublikation "Nasa Spinnoff 1996, Publications" bzw. der US-5,161,107 ist es jeweils bekannt, verschiedene Aufnahmen in verschiedenen Frequenzbereichen vorzunehmen, um so verschiedene Wetter- bzw. Witterungsbedingungen zu berücksichtigen.

Aus der US-5,467,402 ist ein Verfahren zur Objekterkennung bekannt, bei dem Sonnenstand und Witterungsbedingungen berücksichtigt werden.

Der Erfindung liegt daher das technische Problem zugrunde, ein Verfahren und eine Vorrichtung zu schaffen, durch welche die Erkennung und/oder Wiedererkennung von Objekten verbessert wird.

Die Lösung des Problems ergibt sich durch die Gegenstände mit den Merkmalen der Patentansprüche 1 und 34. Weitere vorteilhafte Ausgestaltungen der Erfindung ergeben sich aus den Unteransprüchen.

Für eine verbesserte Erkennung und/oder Wiedererkennung von Objekten, beispielsweise Fahrzeuge, Anhänger, Radfahrer, Fußgänger, Gebäude etc., werden mit mindestens einem Kamera-Rechner-System von mindestens einer Fläche eines Objekts Kamerasensorpixelwerte erfasst und die erfassten Sensorpixelwerte werden um einen Reflexionsanteil korrigiert. Zur Bestimmung des Reflexionsanteils wird mindestens ein Bereich ermittelt, welcher über die Fläche in die Kamera reflektiert wird und mindestens ein Sensorpixelwert des Bereichs erfasst. Der Reflexionsanteil wird in Abhängigkeit von dem oder den Sensorpixelwert(en) ermittelt. Direkt erhobene Sensorpixelwerte weisen im Allgemeinen eine hohe Abweichung von Sensorpixelwerten unter normierten Bedingungen auf, da Flächen von Objekten, insbesondere von Fahrzeugen mit einer lackierten Oberfläche, teilweise stark reflektierend sind. Durch die Berücksichtigung der Sensorpixelwerte des reflektierten Bereichs sind Verfälschungen der erfassten Sensorpixelwerte der Fläche aufgrund von Reflexionen an der Fläche näherungsweise korrigierbar. Der korrigierte Wert kommt dabei einem Wert nahe, der einem Teil des Bereiches entspräche, wenn die verfälschende Reflexion nicht vorhanden wäre. Mit Hilfe des korrigierten Sensorpixelwerts kann

eine Objekt-Hypothese präzisiert werden und die Erfolgsrate einer Wiedererkennung der Objekte unter anderen Blickwinkeln etc. erhöht werden.

Als Sensorpixelwert wird dabei eine Zahlenmenge bezeichnet, die Sensorpixelausgabewerten entspricht, die beispielsweise mittels Schwarz-Weiß-Kamera und/oder Farbmatrixkamera und/oder Infrarot-Kamera (IR-Kamera) ermittelt werden. Eine Weiterverarbeitung der Daten ist bei RGB-Daten sowohl als RGB-Wert und/oder durch eine andere Darstellung von Farbdatenwerten denkbar, welche beispielsweise durch Transformation aus den RGB-Werten ermittelbar ist.

In einer weiteren bevorzugten Ausführungsform wird als Sensorpixelwert des Objekts und/oder des reflektierten Bereichs mindestens ein gemittelter Sensorpixelwert gebildet, wobei mindestens über einen Teilbereich eines Abbilds der Fläche und/oder des Bereichs gemittelt wird. Eine Fläche eines Objekts und/oder ein reflektierter Bereich kann in selteneren Fällen stellenweise ungünstige Eigenschaften für eine Bestimmung eines Sensorpixelwertes aufweisen. Ursache hierfür ist beispielsweise eine Fahrbahnmarkierung, eine partielle starke Verschmutzung der Fläche, eine Pfütze und/oder vereiste Stellen im reflektierten Bereich. Bei Fahrbahnmarkierungen, welche im reflektierten Bereich liegen, kann gemittelt werden über den Bereich. Alternativ kann der Bereich z.B. der Seitenfläche eines Fahrzeugs an etwas anderer Stelle des Fahrzeugs gewählt werden, so dass keine Fahrbahnmarkierung etc. im reflektierten Bereich erwartet wird.

Die Sensorpixelwerte verschiedener Flächen z.B. eines Fahrzeugs weisen im Regelfall einen verschieden hohen Reflexionsanteil auf. Das Dach eines PKW reflektiert oft den zumeist hellen Himmel, so dass dieser dann wesentlich stärker verändert ist als z.B. die Werte einer PKW-Seitenfläche, die in erster Näherung senkrecht zur Ebene der Fahrspur steht und im Allgemeinen nicht den Himmel reflektiert. Falls keine Informationen über Sensorpixelwerte des Himmels vorliegen, wird für eine Fahrzeugwiedererkennung vorzugsweise extrahierten Seitenflächenfarben eine höhere Gewichtung beigemessen. Wenn zusätzlich zu Seitenflächenfarbdaten oder ausschließlich Fahrzeugdachfarbdaten extrahiert werden, ist ein vertikaler Polarisationsfilter sinnvoll. 'Vertikal' bedeutet hierbei, dass der Filter parallel vor dem Objektiv angebracht wird und zwar so, dass die Polarisationsrichtung, welche der Filter nicht durchlässt, die horizontale Richtung ist. Ein vertikaler Polarisationsfilter bewirkt eine Reduzierung des von Fahrzeugdächern reflektierten hellen Himmelslichts, weil das durch die Dächer reflektierte Licht vorzugsweise etwa horizontale Polarisation aufweist, insbesondere nahe dem Brewsterwinkel. Daher können geeignete Dachpixelwerte besser mit vertikalem Polarisationsfilter extrahiert werden, weil dann das reflektierte Himmelslicht näherungsweise durch den Filter abgehalten wird. Auch in dem Fall kann eine zusätzliche algorithmische Korrektur des verbleibenden Reflexionsanteils durchgeführt werden, in erster Näherung ohne Kenntnis der entsprechenden Pixelwerte des Himmels, und in genauerer Näherung, sofern Pixelwerte des Himmels, optimalerweise insbesondere etwa des Bereichs, der über das Dach üblich in die Kamera reflektiert wird, zusätzlich extrahiert werden, unter Berücksichtigung dieser Werte. Man berücksichtigt dabei jeweils eine übliche bekannte vorzugsweise Polarisationsrichtung und einen üblichen Polarisationsgrad des Himmelslichts, welche insbesondere vom Sonnenstand abhängen. Ferner kann gegebenenfalls mit Hilfe der Himmelsfarbdatenwerte zusammen mit Sonnenstand und Blickwinkel im Allgemeinen eine bessere Schätzung des üblichen zugehörigen Polarisationsgrades des Lichts ermittelt werden; z.B. hat blauer Himmel einen anderen Polarisationsgrad als grauer, bewölkter Himmel.

Vorzugsweise wird der Teilbereich der Fläche, von dem Sensorpixelwerte extrahiert werden, in der Mitte der Fläche gewählt, denn Sensorpixelwerte der Randbereiche sind aufgrund von Formgebung des Objekts und/oder anderen Einflüssen wie Verschmutzung des Objekts in Bodennähe häufig stärker verfälscht.

In Einzelfällen können jedoch auch andere Teilbereiche sinnvoll sein. Bei einer hohen Verkehrsdichte und/oder ungeeigneten Blickwinkeln der Kamera, kann es vorkommen, dass der Bereich z.B. der Straße, der über den Teil der Fläche in die Kamera reflektiert würde, nicht direkt auf den Sensor abgebildet wird sondern verdeckt ist von einem weiteren Objekt. In diesem Fall ist es denkbar, auf andere Flächen auszuweichen. Zusätzlich sind bei Seitenflächen Sensorpixelwerte aus etwas weiter unten gelegenen Teilen der Fläche extrahierbar. Üblich ist eine leicht konvexe Krümmung der Seitenfläche, so dass tiefer liegende Teilbereiche Bereiche sind, die Teile der Straße in die Kamera reflektieren, die dann noch oft von keiner anderen Objekthypothese verdeckt sind. Wenn dies der Fall ist, kann dort die Farbdatenextraktion erfolgen. Wenn bei einem Objekt zufällig keine geeigneten Flächen sichtbar sein sollten, so kann dieses Objekt auch in dem Auswerteabschnitt der Wiedererkennung ausgelassen werden. Im Regelfall ist ein gewisser Prozentsatz wiedererkannter Objekte ausreichend, um Reisezeiten zwischen Kreuzungen zu ermitteln. In einer weiteren bevorzugten Ausführungsform wird der Reflexionsanteil, um welchen der erfasste Sensorpixelwert der Fläche oder des Teilbereichs korrigiert werden soll, mindestens unter Berücksichtigung mindestens eines Blickwinkels ermittelt, unter welchem der reflektierte Bereich auf dem Objekt, genauer auf der Fläche oder dem Teilbereich der Fläche, von der Kamera erfasst wird. Des Weiteren wird er vorzugsweise unter Berücksichtigung des Sonnenstandes ermittelt.

In einer weiteren Ausführungsform werden Oberflächeneigenschaften des Objekts im Reflexionsanteil berücksichtigt. Dabei werden beispielsweise übliche Reflexionseigenschaften von Fahrzeuglacken bei üblichem Verschmutzungsgrad und/oder Farbabhängigkeiten berücksichtigt. Um den üblichen Verschmutzungsgrad zu ermitteln, sind beispielsweise erfasste Witterungsbedingungen berücksichtigbar.

Vielfach wird von einer Kamera kein Himmelslicht direkt aufgezeichnet. In dem Falle können Himmelspixelwerte beispielsweise durch eine zusätzliche Kamera extrahiert werden. Vorzugsweise wird anstelle einer zusätzlichen Kamera ein Spiegel eingesetzt, welcher vor der Kamera starr anbringbar ist und der in einen Bildbereich der Kamera, der nicht für die übrige Bildverarbeitung benötigt wird, das Himmelslicht reflektiert. Der Spiegel ist vorzugsweise gekrümmt, so dass ein Großteil des Himmels auf einen Teilbereich des Sensors reflektiert wird. Himmelspixeldatenwerte sind dann näherungsweise in den entsprechenden Pixelwerten der Bereiche kodiert, die den Spiegel abbilden, und können somit für die Korrektur

der Sensorpixelwerte vom Fahrzeugdach verwendet werden. Ferner können die Himmelspixeldaten für eine Beleuchtungsschätzung des überwachten Bereichs eingesetzt werden.

Durch den Vergleich der gesamten gewichteten Abweichungen der verschiedenen Parameter kann bei Unterschreiten eines Schwellenwertes die vorläufige Hypothese gleiches Objekt gestellt werden, sofern die Objekte in einem Intervall um die geschätzte Reisezeit liegen. Die Reisezeitschätzung kann analytisch oder durch eine numerische Verkehrssimulation erfolgen, wobei unterhalb einer Schwellenwertgeschwindigkeit das Reisezeitintervall so groß gewählt werden kann, dass Reisezeiten, wie sie einem Stau entsprächen, enthalten sind, um auch bei Staus Fahrzeuge wieder erkennen zu können. Zur Ermittlung der gesamten gewichteten Abweichungen der verschiedenen Parameter kann vorzugsweise eine Schätzung (die z.B. auch durch ein Trainingsverfahren gewonnen werden kann)der Funktionen der empirischen Standardabweichungen der Parameter berücksichtigt werden, sowie die geschätzte Relevanz der einzelnen Parameter für die Wiedererkennung - z.B. ist die Abweichung der Helligkeit weniger relevant wie die Abweichung des Farbtons. Wenn das Objekt, das den niedrigsten Abweichungswert aufweist, einen um einen weiteren Schwellenwert niedrigeren Abweichungswert besitzt als das Objekt mit dem zweitkleinsten Abweichungswert, so kann die endgültige Hypothese gleiches Objekt aufgestellt werden.

Weiter können in das Verfahren weitere Daten wie zeitlich hochaufgelöste Daten von Induktionsschleifen zur Fahrzeugerkennung integriert werden, indem diese Daten geeignet transformiert werden und gewichtete Abweichungen der transformierten Daten für je zwei Objekte berücksichtigt werden bei der Berechnung der gesamten gewichteten Abweichung als weitere Parameter. Dadurch werden Objekte korrekt unterschieden, die z.B. optisch sehr ähnlich sind, sich jedoch ausreichend bzgl. ihrer Induktionsschleifendaten unterscheiden. In analoger Weise können Daten aus Kameras an Fahrzeugen, die z.B. an Bussen angebracht sind, extrahiert werden, und mit Radar- und Laserdetektoren, Ultraschallsensoren, XFCD-Daten, luft- oder allgestützte Verkehrsdaten integriert werden.

Weiter kann für das somit am geeignetsten erscheinende Objekt untersucht werden, ob zu diesem wiederum ein anderes noch geeigneteres existiert - optional usw. - und in letzterem Falle dies bei der endgültigen Hypothesenbildung berücksichtigt werden.

Falls man an einer hohen Erfolgsrate der Wiedererkennung und nicht an dem Erhalt von Routeninformationen interessiert ist, und falls die Spurwechselhäufigkeit in dem betrachteten Abschnitt üblich sehr gering ist, so kann die Erfolgsrate der Wiedererkennung erhöht werden, indem man Spurwechsler nicht berücksichtigt für die Wiedererkennung. Insbesondere bei kleinem Abstand der Kameras ist Spurwechsel sehr selten. Beispielsweise ist bei zwei Spuren oft die Anzahl der zu vergleichenden Objekte etwa halbiert, wenn man jeweils nur Objekte auf derselben Spur vergleicht. Durch die Reduzierung der zu vergleichenden ähnlichen Objekte erhöht sich i. allg. die Anzahl der endgültigen Wiedererkennungshypothesen.

Die Optimierung der Parameter für die Wiedererkennung - wie Schwellenwerte - für verschiedene Abstände der Kameras ist zeit- und kostenintensiv, weil an vielen verschiedenen Abständen Videoaufzeichnungen erhoben werden müssen. Dies kann man z. T. umgehen, indem man Daten für einen Kameraabstand erhebt, und anschließend den Fall anderer - vorzugsweise größerer - Abstände simuliert, indem man für Objekte derjenigen Kamera, die flussaufwärts ist, die initiale Reisezeitschätzung analytisch oder numerisch mit einer Verkehrssimulation durchführt für den realen Kameraabstand und für einen zweiten virtuellen gewünschten Abstand, und danach die an der Kamera flussabwärts ermittelten Objekte virtuell verschiebt gemäß der Differenz der geschätzten Reisezeiten. Wenn man auf diese Weise z. B. einen sehr großen Abstand simuliert, so werden i. allg. weit mehr Objekte im geschätzten Reisezeitintervall liegen und somit bei der Ermittlung der Wiedererkennungshypothesen berücksichtigt. Noch Realitätsnähere Ergebnisse erhält man, wenn man die Auswertung für den realen Kameraabstand durchgeführt hat und speichert, welches Fahrzeug welchem entspricht, denn dann kann man eine Verkehrssituation für die Objekte von der Kamera flussabwärts durchführen und bei der virtuellen Kamera flussabwärts diese mit den an der realen Kamera flussaufwärts ermittelten Daten versehen und dann die Wiedererkennung durchführen.

Es kann eine Schätzung der zeitabhängigen üblichen Reisezeit berechnet werden, indem eine Mittelung über einige zeitlich benachbarte extrahierte Reisezeiten erfolgt, wobei bei Wiedererkennungssystemen mit Fehlern vorzugsweise seltene Ausreißerwerte unberücksichtigt bleiben. Eine derartige Reisezeit kann auch direkt durch Objekterkennung und Tracking ohne eine Wiedererkennung z.B. für einen Bereich, der nur von einer Kamera erfasst wird, ermittelt werden.

Die Erfolgsrate der Wiedererkennung kann erhöht werden, indem man zusätzlich Objektfolgen und/oder Platoons wieder erkennt. Bei Beginn einer Grünphase entsteht i. allg. ein Platoon von Fahrzeugen, dessen Reisezeit beim Eintreffen flussabwärts - d. h. in Fahrtrichtung im weiteren Verlauf der Straße - ermittelt werden kann. Bei Objektfolgen, z. B. 5 hintereinander detektierter Fahrzeuge, kann im flussabwärts überwachten Bereich diese Folge wieder gesucht werden unter der Annahme, dass die Folge sich kaum verändert hat. Man berechnet dazu ein Gesamtfehlermaß der Parameterwerte der Einzelobjekte der Objektfolge mit gemäß der Reisezeitintervallschätzung in Frage kommender Objektfolgen zunächst unter der Annahme unveränderter Reihenfolge, dann unter der Annahme, dass ein Objekt fehlt oder eines hinzugekommen ist, wobei man jeweils nur die selbe Anzahl Objekte vergleicht, und optional ob eine einfache Vertauschung in der Reihenfolge vorliegt etc. Die Objektfolge mit niedrigstem Fehlermaß, wobei in das Fehlermaß die Anzahl der berücksichtigten Parameter eingeht, wird als endgültige Wiedererkennungsobjektfolgenhypothese definiert, sofern dessen Fehlermaß einen Schwellenwert unterschreitet und die absolute Differenz zur Folge mit dem zweitniedrigsten Fehlermaß einen weiteren Schwellenwert unterschreitet. Beim Objektfolgenvergleich können Objekte besser wieder erkannt werden aufgrund der erhöhten Qualität der zu vergleichenden gemäß vorliegender Schrift korrigierten Sensorpixelwerte bzw. z.B. HSV-Werte.

Schließlich können die gewonnenen Verkehrsinformationen für eine Optimierung der Verkehrssteuerung eingesetzt werden.

Mit Videodetektoren können zunächst üblicherweise in einem bestimmten Ortsbereich vor einer Lichtsignalanlage (LSA) zuverlässig Verkehrsdaten gewonnen werden. Diese Informationen ermöglichen ein verbessertes Schalten zwischen Grün- und Rotphase, so dass die Wartezeit der Fahrzeuge vor der LSA pro Umlauf verringert wird. Um die Anzahl der Kameras, die einen Kostenfaktor darstellen, klein zu halten, kann oft nur in einem begrenzten Bereich vor einer LSA eine sichere Verkehrsdatenextraktion erfolgen.

Wenn man z. B. die maximale Aufstelllänge pro Umlauf zur Steuerung der LSA verwendet, so wird bei starkem Verkehr die maximale Aufstelllänge oft über der liegen, die von der Kamera sicher erfasst werden kann. Dann ist sinnvoll, dass anstelle der mit Videodetektoren ermittelbaren Zeitlücke für eine Zeitlückensteuerung oder der ermittelbaren maximalen Aufstelllänge eine pro LSA-Umlauf zeitlich gemittelte Aufstelllänge oder diejenige, die zu einer definierten Zeit nach Beginn der Rotphase vorliegt, oder die detektierte Fahrzeugdichte etwa zu Beginn der Rotphase, berücksichtigt wird, um eine LSA-Steuerung durchzuführen. Hierdurch kann auch bei sehr dichtem Verkehr auf beiden sich kreuzenden Straßen, wenn die maximale gemessene Aufstelllänge bereits immer etwa den gesamten von der Kamera ausgewerteten Bereich umfasst oder die Zeitlücken alle gering sind, noch eine Verbesserung der LSA-Steuerung erzielt werden, indem dann der Straße, z.B. deren Fahrzeugdichte etwa zu Beginn der Rotphase höher ist, im Folgenden eine verlängerte Grünzeit gegeben wird, bis zu einem bestimmten maximalen Verhältnis von Grün- zu Rotzeit. Zudem kann hierbei die summierte Aufstelllänge der zuführenden Straßen unter Berücksichtigung der empirisch ermittelten oder geschätzten üblichen Abbiegewahrscheinlichkeiten mitberücksichtigt werden, indem der Straße mit höherer summierter Aufstelllänge mehr Grünzeit gegeben wird. Für Fahrzeuge, deren geplante Routen einem Routingdienst vorliegen, der sie mit Einwilligung der Nutzer der Verkehrssteuerung zur Verfügung stellt, können die genauen Routen anstelle der einfachen Abbiegewahrscheinlichkeiten berücksichtigt werden.

Weiter kann eine verbesserte Netz- und/oder LSA-Steuerung erzielt werden, indem die Informationen über ermittelten Abstände, Geschwindigkeiten und Beschleunigungen der einzelnen Fahrzeuge vor einer LSA mitberücksichtigt werden. Schätzungen für die Zeiten, wann die Fahrzeuge an der Haltelinie ankämen, können daraus errechnet werden und somit eine verbesserte Grünzeit berechnet werden zur Verringerung der mittleren Reisezeiten, indem insbesondere Grünzeiten um einen kleinen Betrag verlängert werden können, wenn dadurch Fahrzeuge passieren können und nach Ihnen eine größere Zeitlücke vorhanden ist, und Grünzeiten um einen Betrag verkürzt werden können, wenn keine Fahrzeuge mehr in einem Bereich vor der LSA sind. Allgemein lässt sich in einem Netz die mittlere Reisezeit erniedrigen, indem anhand der Daten und anhand des geeigneten Auffüllens mit virtuellen Daten in Bereichen, in denen Daten fehlen, eine Verkehrssimulation mit verschiedenen virtuellen Grünzeiten bis zu einem Zeithorizont durchgeführt wird und die mit geringster mittlerer Reisezeit ausgewählt wird. Das Auffüllen kann zu Beginn mit dem Mittelwert aus den mittleren Dichten - sofern vorhanden - und Mittelwert aus den mittleren Flüssen - sofern vorhanden - zwischen je zwei überwachten Bereichen durchgeführt werden, wobei überschüssige bzw. fehlende Fahrzeuge am nächsten überwachten Ort entfernt bzw. integriert werden, und anschließend kann mit den gemäß der Simulation sich ergebenden Werten aufgefüllt werden. Wenn nur mittlere Dichte oder mittlerer Fluss oder mittlere Geschwindigkeit vorhanden sind, können anhand von Fundamentaldiagrammen des Verkehrs, die vorzugsweise in Abhängigkeit von Größen einer LSA-Steuerung wie dem Zeit-Offset verwendet werden, die jeweils fehlenden Größen festgelegt werden. Zudem kann an einem Detektorort mit der Verkehrssimulation bis zu einem bestimmten Zeitbetrag vorwärts und rückwärts für die entsprechenden benachbarten Ortsbereiche simuliert werden, so dass der Verkehr insgesamt dadurch noch besser im System abgebildet wird. Für Fahrzeuge, deren Route mittels eines Routingdienstes, den das Fahrzeug nutzt, dem Verkehrssimulationssystem auf freiwilliger Basis bekannt gemacht worden ist, kann die entsprechende Route in der Simulation berücksichtigt werden; für andere Fahrzeuge wird gemäß empirisch ermittelten oder geschätzten üblichen Abbiegewahrscheinlichkeiten eine Route in der Verkehrssimulation berücksichtigt, und/oder mit Hilfe einer synthetischen Bevölkerung und entsprechender Zielort und Routenwahl. Bei der Auswahl einer bestimmten Grünzeitverteilung wird vorzugsweise neben dem Kriterium möglichst geringer mittlerer Reisezeit zudem das Kriterium verwendet, dass extrem hohe Reisezeiten vermieden werden, indem insbesondere wenigen detektierten Fahrzeugen, die auf einer kleinen Straße vor einer LSA und einer Kreuzung mit einer großen Straße mit viel Verkehr warten, nicht mehr als eine bestimmte maximale Rotzeit zugemutet wird. Bei einem Objekterkennungssystem mit unsicherer Fahrzeugdetektion wird generell eine Obergrenze der Dauer der Phase Rot verwendet, damit nicht detektierte wartende Fahrzeuge nicht extrem lange Reisezeiten erhalten. Die Verkehrssimulation wird bis zu einem maximalen Zeithorizont durchgeführt und anschließend wird die Wahl der geeigneten Verkehrssteuerungssignale durchgeführt und diese werden bis zu einer bestimmten maximalen Zeitdauer realisiert während die nächste Verkehrssimulation durchgeführt wird usw.

Die aus der mittels Fahrzeugwiedererkennung berechneten Reisezeiten können unter zu Hilfenahme von Fundamentaldiagrammen des Verkehrs und/oder mittels Verkehrssimulation verwendet werden, um eine Information über die Anzahl der Fahrzeuge im nicht-überwachten Gebiet und somit über die Fahrzeugdichte zu erzeugen. Damit wird die LSA-Steuerung weiter verbessert, indem vorzugsweise bei Fahrspuren bzw. Straßen mit höherer Dichte von Fahrzeugen die Grünphase der entsprechenden Fahrspur bzw. Straße vorausschauend erhöht wird. Die Verkehrsinformationen wie Fahrzeuge und/oder Reisezeiten können neben der LSA-Steuerung zur Steuerung von Informationssignalanlagen wie z.B. Richtgeschwindigkeitssignalanlagen, Warnhinweissignalanlagen, elektronisch gesteuerten Schildern, Parkraumbelegungshinweisen oder Wechselwegweiser verwendet werden. Die Hinweise können auch direkt an XFCD-Fahrzeuge und/oder tragbare Systeme wie PDAs mit GPS o. ä. übermittelt werden. Wenn der Verkehrsfluss sich im für die Entstehung von Staus kritischen Bereich von Fundamentaldiagrammen des Verkehrs befindet, erniedrigt man vorzugsweise die Richtgeschwindigkeit zur Vorbeugung von Staus. Bei detektierten Staus kann im Bereich flussaufwärts zudem davor gewarnt werden, indem die Informationen dorthin übermittelt und angezeigt werden. XFCD-Fahrzeugen kann zudem das detektierte Ende/der detektierte Anfang eines Staus und für Fahrzeuge im Stau die voraussichtliche Dauer bis zum Ende des Staus mitgeteilt werden. Informationen von XFCD-Fahrzeugen, die ein Park-and-Ride-System nutzen möchten, können das System über ihre voraussichtliche Ankunftszeit und Zielort informieren. Das System kann die Abfahrt eines öffentlichen Beförderungsmittels gemäß der Menge der einlaufenden Informationen geeignet wählen. Vorzugsweise wird nicht immer nach Plan abgefahren, sondern etwas später, wenn gemäß diesen Informationen dadurch noch ein Kunde mitgenommen werden kann. Das System kann seinerseits die aktuell geplante Abfahrtszeit den Kunden ins XFCD-Fahrzeug mitteilen. Derartiges kann ebenfalls zwischen Benutzern öffentlicher Transportmittel und Personen mit entsprechenden tragbaren Systemen wie PDAs mit GPS o. ä. durchgeführt werden.

Die Verkehrs- und Reisezeitinformationen können Datenbanken und einem dynamischen Routingdienst zur Verfügung gestellt werden, so dass Nutzern eines solchen Dienstes verbesserte aktuelle Routenempfehlungen gegeben werden, indem vorzugsweise eine Route mit niedriger prognostizierter Reisezeit genannt wird.

Die Routingsoftware kann in einer oder mehreren Zentrale(n) und/oder im Fahrzeug selbst enthalten sein. In letzterem Falle kann die Reisezeitinformation und/oder weitere Information auch direkt vom Wiedererkennungssystem lokal an die Fahrzeuge mit entsprechender Empfangsvorrichtung gesendet werden. Diese Fahrzeuge übertragen die Informationen an weitere Verkehrssteuerungssysteme und/oder an im Straßennetz benachbarte Fahrzeuge und ermöglichen somit insgesamt ein Routing, das optional ohne Zentrale(n) arbeiten kann.

Die Reisezeitinformationen der einzelnen Objekte, die Reisezeiten aufzeichnen können wie z. B. FCD- oder XFCD-Fahrzeuge oder Personen mit entsprechenden tragbaren Systemen wie PDAs mit GPS o. ä., können von diesen und/oder vom zentralen Routingdienst an ein lokales und/oder zentrales LSA-Steuerungssystem gesendet werden, das diese Informationen nutzen kann, um eine verbesserte LSA-Steuerung durchführen zu können, entweder als Ergänzung zu optisch und/oder mit Induktionsschleifen zur Fahrzeugerkennung erhobenen Daten und/oder an LSAs, für die keine optisch und/oder mit Induktionsschleifen erhobenen Daten zur Verfügung stehen. Im Falle lokaler Netzsteuerungen kann insbesondere eine lokal stark erhöhte Reisezeit an die Netzsteuerungsanlagen wie LSA, die an den zuführenden Straßen vorhanden sind, weitergegeben werden, um dort den Zufluss in das verstopfte Segment durch verkürzte Grünzeiten zu reduzieren.

Informationen z. B. von XFCD, die Rückschlüsse über die Witterung etc. enthalten, wie z. B. über Sichtweite, Glatteis oder über starken Regen, können an die Verkehrssteuerungs-/Routingsysteme und - oder von dort - an die Fahrzeugerkennungssoftware weitergeleitet werden. Die Informationen können berücksichtigt werden zur verbesserten Wahl von Parametern des Erkennungs- und Wiedererkennungsalgorithmus, um die Ausgabeergebnisse weiter zu verbessern.

Ein dynamisches Re-Routing mit Hilfe der aktuellen Reisezeitinformationen kann durchgeführt werden. Z. B. kann durch einen Störfall die Reisezeit auf einem Segment plötzlich stark zunehmen und dazu führen, dass eine Neuberechnung der günstigsten Route für andere Nutzer eine Umleitung um das Segment mit dem Störfall als sinnvoll ergibt. Dies kann dem Nutzer mitgeteilt werden und/oder direkt beim Routing berücksichtigt werden.

Die Reisezeitinformationen können in einer Verkehrssteuerung, die eine Lastabwurfstrategie beinhaltet, berücksichtigt werden. Eine ermittelte plötzlich stark erhöhte Reisezeit auf einem Segment wird verwendet, um die LSA in dem umliegenden Bereich so zu steuern, dass der Zufluss in das Segment bzw. in die darauf zuführenden Segmente sinkt und/oder eine nahe Umleitung mit Bevorzugung größerer Straßen verlängerte Grünzeiten erhält. Mit einer Verkehrssimulation können zeitabhängige Verkehrsprognosen berechnet werden für verschiedene Änderungen der LSA-Steuerung und eine günstige LSA-Steuerung ausgewählt werden.

Die Verkehrs- und Reisezeitinformationen können z. B. mit einer Verkehrssimulation für eine Korridorsteuerung, z.B. einer grünen Welle zwischen zwei Punkten einer Stadt, eingesetzt werden. Sie ermöglichen es unter Nutzung von Informationen eines Routingdienstes und/oder einer Verkehrsdatenbank, in Abhängigkeit vom Verkehr eine Fahrtrichtung zu bevorzugen, eine grüne Welle verbessert an die jeweilige Verkehrsdichte und/oder an Fahrzeuge mit Sonderrechten anzupassen, und/oder Lastabwurf bei zu hoher Reisezeit auf einem Segment zu bewirken.

Die genannten Verkehrssteuerungsinformationen können zur Verbesserung des dynamischen Re-Routings verwendet werden. In einer Verkehrssimulation mit der geplanten Verkehrssteuerung kann berücksichtigt und berechnet werden, dass Staus sich i. allg. mit bestimmter Geschwindigkeit flussaufwärts bewegen und somit einige Zeit später andere Segmente blockiert sein können. Wenn ein Nutzer des dynamischen Re-Routings gemäß einer zunächst berechneten Route zu einem solchen zukünftigen Zeitpunkt in die entsprechenden blockierten Segmente fahren würde, kann vorher das Re-Routing erfolgen und dieses verhindern.

Für Gruppen von Fahrzeugen - z. B. einer Touristengruppe - kann beim dynamischen Re-Routing berücksichtigt werden, dass die Gruppe möglichst gar nicht oder nicht mehr als einen bestimmten Abstand getrennt werden soll. Mittels Location Based Services kann der jeweilige Ort der übrigen Fahrzeuge bestimmt werden und ein dementsprechendes Re-Routing für alle Teilnehmer der Gruppe erfolgen.

Verkehrssteuerungssysteme wie LSA-Steuerungssysteme können den Fahrzeugen mit entsprechender Empfangsvorrichtung Informationen, z.B. einem wartenden Fahrzeug über die verbleibende Dauer der Rotphase, Staus, Störfälle, Informationen über Ziele, freien Parkraum und/oder Werbung mitteilen, und vom Fahrzeug aus können mittels Funk Parkraum reserviert/bezahlt und/oder Waren/Dienstleistungen gekauft werden, die dadurch bei Ankunft am Ziel bereits bereit zur Abholung/Nutzung stehen können.

Fahrzeuge mit Sonderrechten - wie z. B. ein Rettungsfahrzeug im Einsatz - können LSA-Steuerungssystemen Informationen senden, dass sie an eine LSA heranfahren bzgl. welchen Zielort sie haben und welche Route sie verwenden möchten. Solche Informationen können vom LSA-Steuerungssystem zur bevorzugten Freigabe der Straße für das Fahrzeug verwendet werden, was die Sicherheit der Verkehrsteilnehmer erhöht und die Reisezeit des Fahrzeugs verringert. Bei bekannter gewünschter Route kann mittels Verkehrsimulation verschiedener Szenarien eine geeignete Steuerung mit geringer Reisezeit für das Fahrzeug ermittelt werden.

Mit allen elektronischen Informationssystemen an der Straße und Informationen an XFCD-Fahrzeuge kann eine konzertierte Verkehrssteuerung zusammen u. a. mit den LSA-Steuerungen und Geschwindigkeitsbegrenzungssignalanlagen durchgeführt werden, vorzugsweise unter zu Hilfenahme der Ergebnisse einer Verkehrssimulation. In Bereichen flussaufwärts von detektierten Staus kann der Zufluss in den Stau verringert werden durch entsprechend kürzere Grünzeiten und verringerte zulässige Fahrzeuggeschwindigkeiten und erhöhte Grünzeiten für eine Umleitungsroute zusammen mit erhöhten zulässigen Fahrzeuggeschwindigkeiten.

Mittels der beschriebenen Verkehrssimulation in Form einer stochastischen Simulation kann vorab simuliert werden, ob in einem Abschnitt ein Stau zu erwarten ist. Da im Verkehr z. T. recht zufällige Reaktionen der Fahrer relevant sind, ist durch eine einmalige Simulation i. allg. keine Abschätzung einer Stauwahrscheinlichkeit möglich. Stattdessen kann eine Monte-Carlo-Simulation durchgeführt werden, bei der aus mehreren Durchläufen der stochastischen Verkehrssimulation sich eine Stauwahrscheinlichkeit schätzen lässt und diese Information zur weiteren Verbesserung der Steuerung der Signalsysteme eingesetzt wird.

Nachdem durch einen Nutzer eines Navigationssystems eine Route gewählt wurde, sofern der Nutzer einverstanden ist, kann automatisch immer - oder andernfalls kann der Nutzer dies von Fall zu Fall entscheiden - die Route an ein Verkehrssteuerungs-/Routingsystem übermittelt werden. Letzteres System kann diese Route in der Verkehrssimulation berücksichtigen zur Erstellung einer verbesserten Verkehrsprognose und Verkehrssteuerung/-routing/-re-routing.

Die durch die Fahrzeugwiedererkennung ermittelten Reisezeitinformationen und/oder durch Verkehrssimulation ermittelten Reisezeitinformationen können einem elektronischen Mautsystem zur Verfügung gestellt werden. Dieses kann daraus den aktuell gültigen Preis für die Benutzung einer Strecke berechnen, indem es vorzugsweise die Benutzung von Abschnitten mit überhöhter Reisezeit entsprechend verteuert.

Das Routingsystem, dass auf den beschriebenen Verkehrsdaten beruht, kann erweitert werden, indem, wenn bei einem Unfall und/oder Notfall irgendetwas benötigt wird von einem Unfallopfer oder durch Unfallhelfer eines Rettungsfahrzeugs mittels Funk den Routingdiensten und/oder anderen XFCD-Fahrzeugen mitgeteilt wird, was wo benötigt wird. Wenn ein XFCD-Fahrzeug in der Nähe das benötigte hat oder eine Person aushelfen kann, besteht die Möglichkeit, auszuhelfen. Kolonnen können den Routingdiensten und/oder anderen XFCD-Fahrzeugen Auskunft geben über ihre Länge, maximale Geschwindigkeit und Fahrtroute und somit über die Dauer, die man hinter ihnen bleiben muss, wenn man nicht auf eine andere Route ausweicht. Wenn die Kolonne es dem Routingdienst mitteilt, kann dies integriert werden mit den übrigen Reisezeitinformationen in einer Verkehrssimulation und automatisch beim dynamischen Routing und Re-Routing berücksichtigt werden. Ein Sonderfahrzeug kann Informationen, z.B. wo es sich befindet, welches Ziel/Route es hat, wie schnell und über welche Straßen es fahren darf, welches Gewicht, Länge, Breite, Höhe, Ladungsart und -menge und welche Achsenzahl es hat und wo diese Achsen sich befinden, an Routingdienste und/oder XFCD-Fahrzeuge senden. Ebenso können XFCD-Fahrzeuge zeitlich konstante und/oder zeitlich veränderliche Fahrzeugeigenschaften und Fahrereigenschaften (Schnellfahrer/Langsamfahrer) dem Routingdienst mitteilen. Die Informationen können z.B. vom Routingdienst in einer Verkehrssimulation berücksichtigt werden, wodurch eine bessere Verkehrsprognose und somit ein besseres Routing möglich werden. Für die XFCD-Fahrzeuge können dadurch bessere Routen gewählt werden - dies kann automatisch durch das System erfolgen, indem z.B. Routen ausgeschlossen werden, bei denen sich ein Sonderfahrzeug voraussichtlich zu einem Zeitpunkt auf dem selben Straßenabschnitt wie das XFCD-Fahrzeug gemäß der geplanten Route befindet. Verschiedene Baufahrzeuge mit verschiedenen Materialien etc. sowie die am Bau beteiligten Personen können sich via Funk direkt oder via Location Based Services oder über eine Zentrale automatisch informieren, wo sie sich befinden und wann sie gemäß Routenplaner voraussichtlich am Zielort ankommen. Wenn ein Ziel voraussichtlich schneller oder später erreicht wird als vorgesehen, wird dies automatisch mitgeteilt, so dass die danach benötigten Fahrzeuge entsprechend früher oder später starten können und in letzterem Falle andere Auftragsarbeiten zwischendurch erledigen können. Hierdurch kann die Dauer einer Arbeit reduziert werden, was Kosten spart. Eine Flotte öffentlicher Verkehrsmittel, z.B. eine Busflotte, kann so erfahren, wo die anderen insbesondere die benachbarten Fahrzeuge sich befinden. Somit kann, wenn sich zwei Fahrzeuge der Flotte dicht hintereinander befinden, das erste an einer Haltestelle vorbeifahren, weil direkt danach ein zweites kommt. Dadurch erhöht sich der Zeitabstand der Fahrzeuge wieder, was insbesondere sinnvoll ist, wenn das erste zu spät ist. Denn, wenn das erste die Personen an der Haltestelle aufnähme, würde die Verspätung noch größer werden, und das zweite würde noch näher auf das erste auffahren, weil das zweite an der Haltestelle i.allg. dann keinen Fahrgast mehr vorfände und gegebenenfalls durch fahren könnte. Dann ist dieses Verfahren, Personen nicht aufzunehmen, sinnvoll zur Verringerung der mittleren Wartezeiten der Personen. Personen mit PDAs mit GPS o. ä. in öffentlichen Fahrzeugen, die umsteigen möchten, können dies via PDAs mit GPS einem System an der Haltestelle und/oder in den öffentlichen Fahrzeugen mitteilen, die es den benachbarten öffentlichen Fahrzeugen mitteilen können, so dass letztere nötigenfalls etwas warten können, um die Person umsteigen zu lassen. Bei Unfällen und Blockaden einer Straße, die auf einer Buslinie läge, kann durch einen Routingdienst einem Bus eine schnellere Ausweichroute mitgeteilt werden. Sofern in der Nähe des Unfalls eine durch den Unfall unerreichbare Haltestelle läge, und dort eine elektronische Anzeige ist, kann dort angegeben werden, dass aufgrund des Störfalls diese Haltestelle nicht angefahren werden kann und wo die nächsten Haltestellen sich befinden. Bei Großveranstaltungen und im Katastrophenmanagement können Informationen, wo, wann und - soweit bekannt - wie lange sie stattfinden, Routingdiensten übermittelt werden. Dadurch können diese Raum-Zeit-Bereiche bei der Routensuche für Nicht-Teilnehmer bzw. Unbeteiligte ausgespart werden, was ein schnelleres und besseres Routing bewirkt. Für Teilnehmer einer Großveranstaltung können automatisch via PDA mit GPS o. ä. Informationen durch Überwachungssysteme, z.B. basierend auf Kameras im sichtbaren und/oder infraroten Bereich, gesendet werden, welche die Personendichte in Bereichen der Veranstaltung ermitteln, gesendet werden. Anhand der Informationen können Personen vermeiden, sich zu Bereichen der Veranstaltung zu bewegen, die bereits überfüllt sind und Ausweichrichtungen und -Routen geringer prognostizierter Dichte können angegeben werden, wenn eine kritische Personendichte überschritten wird. Gruppen von Personen, die getrennt werden können, wenn die Personen nicht in der Lage oder nicht willens sind, ihren Ort mitzuteilen, sich wieder finden mittels Location Based Services und/oder mittels mit GPS o. ä. ausgestatteten PDAs und sich den Ort des jeweils anderen anzeigen lassen.

Die genannten Verfahren bzw. Vorrichtungen zur Verkehrssteuerung können auch auf mit anderen Verfahren erhobenen Verkehrsdaten basierend durchgeführt werden.

Die Erfindung wird nachfolgend anhand eines bevorzugten Ausführungsbeispiels näher erläutert. Die Figuren zeigen:

Fig. 1 schematisch eine Verkehrssituation, wobei ein Bereich einer Fahrspur durch ein Objekt in eine Kamera reflektiert wird, dessen Sensorpixelwerte direkt durch ein Kamera-Rechner-System erfassbar sind und

Fig. 2 schematisch eine Verkehrssituation, wobei ein Bereich der Fahrspur durch das Objekt in die Kamera reflektiert wird, dessen Sensorpixelwerte nicht direkt durch das Kamera-Rechner-System erfassbar sind.

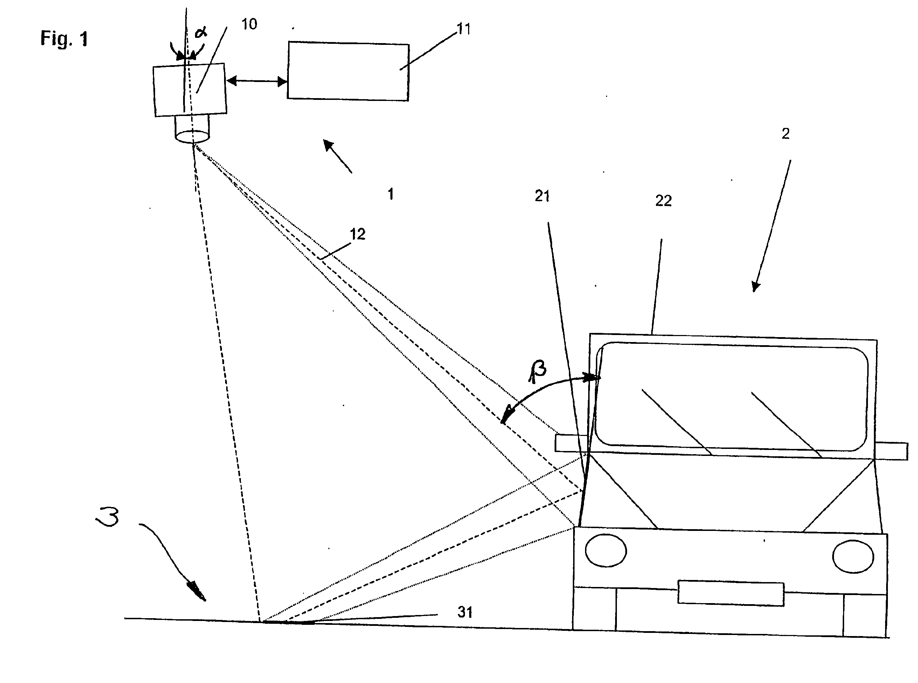

Fig. 1 zeigt schematisch ein Kamera-Rechner-System 1, durch welches ein Objekt 2 erfasst wird, wobei das Objekt 2 ein PKW ist, welcher sich auf einer Fahrspur 3 befindet. Das Kamera-Rechner-System 1 dient dabei alleine oder in Kooperation mit weiteren Kamera-Rechner-Systemen zur Überwachung eines Straßenverlaufs, einer Kreuzung oder einer größeren Region.

Das Kamera-Rechner-System 1 umfasst eine Kamera 10 und eine Recheneinheit 11, durch welche Daten der Kamera 10 verarbeitet werden. Die Kamera 10 und die Recheneinheit 11 können dabei als eine Einheit ausgebildet werden oder als unterschiedliche Einheiten, welche an unterschiedlichen Orten angebracht sind und drahtlos oder über eine geeignete Leitung zum Übertragen von Daten wirkverbunden sind. Anstelle einer Kamera 10 kann ein Verbund mehrerer Kameras Daten an die Rechnereinheit 11 liefern, z.B. eine Farbmatrixkamera und eine IR-Kamera. Eine IR-Kamera ist insbesondere bei Nebel bzw. nachts vorteilhaft. Die Kamera 10 ist an einer geeigneten Stelle angebracht, beispielsweise an einer Häuserwand, an einer Straßenkreuzung oder an einem Masten. Vorzugsweise wird die Kamera 10 in einer Höhe von mindestens ca. 8m und mit einem Winkel a gegenüber der Vertikalen angebracht, der kleiner als etwa 80 Grad ist - vorzugsweise wesentlich kleiner. Durch einen kleinen Winkel a lassen sich Probleme einer gegenseitigen partiellen Verdeckung der durch die Kamera 10 beobachteten Objekte reduzieren bzw. vermeiden.

Für eine Überwachung müssen Objekte bei einem Eintritt in den überwachten Straßenverlauf und/oder die überwachte Kreuzung erkannt werden. Werden erfasste Objekte zusätzlich durch das Kamera-Rechner-System 1 klassifiziert und/oder auf andere Weise geeignet verarbeitet, so können klassifizierte Objektdaten an ein oder mehrere benachbarte Kamera-Rechner-System(e) weitergeleitet werden und dienen diesem zur schnellen Wiedererkennung. Die Wiedererkennung von Objekten, insbesondere eine Wiedererkennung ohne Erfassung des Kennzeichens, erlaubt eine anonymisierte Verkehrsbeobachtung. Für eine Wiedererkennung von Objekten sind verschiedene, einem Objekt zugeordnete Attribute zu überprüfen. Denkbare Attribute sind beispielsweise Breitenabmessungen, Längenabmessungen, zeitlich hochaufgelöste Daten aus Induktionsschleifen zur Fahrzeugerkennung sowie Farbdatenwerte. Aus extrahierten Abmessungen und z.B. aus detektierten Ecken des Objekts lässt sich das Objekt einem 3-d-Drahtgittermodell zuordnen, d.h. ein Fahrzeugprototyp lässt sich ermitteln. Für einen Vergleich von einer Objekt-Hypothese mit einem Objekt oder einer anderen Objekt-Hypothese lässt sich mindestens eine Fehlerfunktion formulieren, welche mindestens ein Attribut berücksichtigt. Überschreitet eine Fehlerfunktion einen vorgegebenen Schwellenwert, der insbesondere von der Anzahl der berücksichtigten Parameter abhängt, so wird die Hypothese verworfen, es handele sich um dasselbe Objekt. Eine Nähe zum Schwellenwert gibt ein Maß für die Unsicherheit der Objekt-Hypothese an. Zum Vergleich einer Objekthypothese mit anderen Objekten sind so viele Objekte zuzulassen, wie sie gemäß üblichen Reisezeiten zwischen den Orten in Frage kommen. Verglichen werden vorzugsweise nur Objekthypothesen von Orten, die im Straßenverlauf aufeinander folgen.

Für den Fall, dass z.B. zwei sehr ähnliche Fahrzeuge mit kurzem Zeitabstand und selbem Routenabschnitt nicht unterschieden werden können, aber als Objektmenge an der nächsten Kreuzung wieder erkannt werden, lässt sich der Mittelwert ihrer Reisezeiten ermitteln, denn dieser hängt nicht davon ab, ob sie ihre Reihenfolge ändern. Falls man zusätzlich eine Schätzung über ihre Routen aufstellen möchte, ist ein einfacher Ansatz die Annahme, dass die beiden Fahrzeuge ihre Reihenfolge nicht verändert haben, weil dies der häufigere Fall ist.

In einem bevorzugten Verfahren zur Ermittlung von Objektdaten wird zunächst unter Verwendung von Passpunkten eine Näherung eines Abbildes der Fahrbahnfläche ermittelt, wobei Passpunkte beispielsweise unter Verwendung von GPS-Daten o. ä. bestimmt werden. Durch bekannte Verfahren wird aus dem Abbild der Fahrbahnfläche eine erste Näherung für ein Abbild eines Objekts 2 oder mehrerer Objekte ermittelt. Für Prototypen von Objekten, beispielsweise bestimmte PKW-Typen, LKW-Typen etc., liegen vorzugsweise Modelle im Kamera-Rechner-System 1 vor. Das Modell ist beispielsweise ein 3D-Drahtgittermodell.

Anhand des erfassten Abbildes des Objekts 2 wird mindestens ein geeignetes Modell gewählt und an extrahierte Merkmale des Abbildes angepasst, vgl. "Untersuchungen zu einer systematischen Leistungssteigerung in der modellbasierten Bildfolgenauswertung" (Shaker Verlag, Aachen 2001). Andere Methoden zur Bestimmung einer Hypothese des Objekts 2 sind denkbar.

Ein Attribut oder Merkmal für eine Klassifizierung eines Objekts 2 sind dessen Sensorpixelwerte. Andere Merkmale sind beispielsweise dessen Ortsvektor, Geschwindigkeitsvektor, Beschleunigungsvektor, Fahrzeug-Prototyp, Größenabmessungen, Fahrspur mit Richtung, Zeitpunkt etc.

Sensorpixelwerte werden oft als RGB-Werte erfasst. RGB-Werte sind näherungsweise in Abhängigkeit von einer Intensitätsdichte I(f) des Lichtes bzgl. betrachteter Frequenzen f über einem Zeitintegrationsfenster, d.h. etwa der Belichtungszeit, beschreibbar:

$$R=R(I(f)), \quad G= G(I(f)), \quad B=B(I(f)) \,.$$

Für eine bessere Lesbarkeit werden Indizes für Pixelnummer, Zeitpunkt etc. ausgelassen.

Die Intensitätsdichte I(f) weist Standardabweichungen auf, welche unterschiedlichste Ursachen haben, beispielsweise ein stochastisches Auftreffen von Photonen auf einen Sensor der Kamera 10. Die Intensitätsdichte über einem Pixel ist auch eine Funktion des Ortes. Derartige Einflüsse sind jedoch vernachlässigbar, wenn die Sensorpixelwerte über mehrere Pixel näherungsweise konstant sind. Der Ausschnitt des Abbildes, in welchem die Sensorpixelwerte berücksichtigt werden, ist daher wie oben beschrieben geeignet zu wählen, nämlich etwa mittig von Fahrzeugflächen wie z.B. der Dachfläche. Zahlreiche Faktoren können zu Abweichungen führen, darunter Nebel, Niederschlag, Tropfen auf dem Objektiv, beschlagenes Objektiv, Blooming, Beugung, Blendendurchmesser, diverse Aberrationen etc. Diese können in erster Näherung vernachlässigt werden, alternativ jedoch auch erkannt werden und dem System gemeldet und berücksichtigt werden. Sensorpixelwerte des Objekts 2 werden vorzugsweise an einer Seitenfläche 21 ermittelt. Alternativ oder kumulativ können Sensorpixelwerte am Fahrzeugdach 22 ermittelt werden.

Anhand der Hypothese des Objekts 2, beispielsweise unter Verwendung des 3D-Drahtgittermodells, ist eine Hypothese für einen Bereich eines Abbildes mindestens einer Seitenfläche 21 und/oder Dachfläche 22 im Kamerabild aufstellbar sowie eine Hypothese für einen mittleren Bereich einer unteren Hälfte der Seitenfläche 21.

Vorzugsweise werden

Werte eines ausgewählten Bereichs in der Nähe der Mitte der Fläche zu einem gemittelten Sensorpixelwert verknüpft.
Sensorpixelwerte hängen auch davon ab, wie hoch der Reflexionsanteil der Fläche ist. Der Reflexionsanteil wächst mit abnehmendem Projektionswinkel b, wobei der Projektionswinkel b definiert ist als der Winkel, welcher 90 Grad minus dem Winkel ist, der von einem 3D-Vektor 12 von der Mitte der Hypothese der Fläche 21 bzw. 22 zur Kamera 10 und einem 3D-Vektor, der senkrecht auf der Fläche steht und aus dem Objekt herauszeigt, eingeschlossen wird.
Im in Fig. 1 dargestellten Beispiel wird ein Bereich 31 der Fahrspur 3 von der Seitenfläche 21 in die Kamera 10 reflektiert. Für eine Berücksichtigung dieses Reflexionsanteils wird die Lage der Hypothese des Abbilds des Bereichs 31 im Kamerabild bestimmt und der zugehörige Sensorpixelwert ermittelt. Der üblich zu erwartende Reflexionsanteil im erfassten Sensorpixelwert der Seitenfläche 21 wird aus dem Sensorpixelwert des reflektierten Bereichs 31 abgeleitet. Anschließend wird damit der Sensorpixelwert der Seitenfläche 21 korrigiert um den Reflexionsanteil ermittelt.
Im Falle der Dachfläche werden, wie oben beschrieben, hierzu die Sensorpixelwerte der Hypothese des entsprechenden Himmelsbereichs verwendet.
Erfindungsgemäß wird eine Funktion I_ges(f), welche die Gesamtintensität auf einem Sensor darstellt, auf den die Hypothese eines Bereichs einer Fahrzeugfläche abgebildet wird, aufgespalten in eine Funktion I_refl(f) des Spiegelungsreflexionsanteils, für den näherungsweise gilt, dass der Einfallswinkel gleich dem Ausfallswinkel ist, und eine Funktion I_O(f) für das vom Objekt 2 kommende Licht ohne diesen Reflexionsanteil:

$$\text{I\_ges(f) = Abb( I\_refl(f), I\_O(f) )}.$$

Bei klassischen inkohärenten monochromatischen Quellen mit nicht zu gleichmäßigen Raumzeit-Abständen werden Intensitäten im Mittel näherungsweise addiert. Damit gilt näherungsweise

$$\text{I\_ges(f) = I\_refl(f) + I\_O(f)}.$$

Um Näherungsfehler zu verringern, kann zusätzlich eine übliche Polarisationsverteilung berücksichtigt werden. Dabei kann näherungsweise die bekannte übliche Vorzugsrichtung der Polarisation des Himmelslichts sowie dessen Polarisationsgrad insbesondere in Abhängigkeit vom Sonnenstand, die bekannte vorzugsweise Polarisation des von PKW-Flächen 21 bzw. 22 reflektierten Lichts sowie - falls verwendet - die Wirkung eines Polarisationsfilters berücksichtigt werden.
Die Intensitätsdichten I_refl(f) und I_O(f) sind durch geeignete Näherungsfunktionen I_refl_N(f, a1,...,aM) und I_O_N(f, b1,...,bM) über dem betrachteten Frequenzbereich beschreibbar. Der Zusatz ‚N' kennzeichnet im vorliegenden Text Näherungsfunktionen. Für RGB-Daten kann z.B. M=3 gewählt werden, d.h. aM=a3 und bM=b3. Als Näherungsfunktionen sind beispielsweise Gaußfunktionen verwendbar, welche durch drei Parameter, z.B. Höhe a1, b1, Breite a2, b2 und Mittelwert a3, b3, beschrieben werden. Ergebnisse lassen sich weiter optimieren, indem z.B. statt einer Gaußfunktion eine Summe zweier Gaußfunktionen gleicher Höhe und Breite verwendet wird, deren Maxima beispielsweise viermal ihre Standardabweichung auseinander liegen. Für spezielle Fälle, in denen R und B große Werte aufweisen und G einen kleineren, kann die Verteilung besser durch eine derartige Funktion approximiert werden. Die optimale Wahl der Parameter ist nicht immer eindeutig. Es kann festgelegt werden, welche Wahl der Parameter aus den wenigen möglichen Ergebnissen jeweils in welchen RGB-Bereichen verwendet wird. Alternativ kann z.B. festgelegt werden, dass diese komplexeren oder geeignete andere Funktionen nur im Falle, dass R>G<B gilt, verwendet werden.
Damit gilt:

I_ges_N(f,a1,a2,a3,b1,b2,b3) = Abb(I_refl_N(f,a1,a2,a3), I_O_N(f,b1,b2,b3)).

bzw. näherungsweise
I_ges_N(f,a1,a2,a3,b1,b2,b3) = I_refl_N(f,a1,a2,a3) + I_O_N(f,b1,b2,b3).
Liegen RGB-Werte R_rB, G_rB, B_rB für den reflektierten Bereich 31 vor, so lassen sich daraus Parameterwerte a1,...,aM der Näherungsfunktion I_refl_N(f,a1,...,aM) näherungsweise bestimmen.

Hierfür ist zunächst eine Veränderung der Farbdatenwerte R_rB, G_rB, B_rB aufgrund der Reflexion zu ermitteln. Vorzugsweise wird dabei Wissen über einen üblichen Reflexionsanteil bei gegebenem Blickwinkel und/oder bei Mittelung über übliche Lacke, übliche Verschmutzungsgrade etc. berücksichtigt. Eine Berücksichtigung erfolgt näherungsweise durch eine Abbildung Ref Ref (I_refl_N(f, a1, a2, a3)) = I_refl_N(f, a1, a2, a3) / Refl, wobei Refl mindestens abhängt von dem Projektionswinkel b, unter dem ein reflektiertes Abbild des analysierten Bereichs 31 oder Teilen davon durch die Kamera 10 auf der Seitenfläche 21 des Objekts 2 erwartungsgemäß erfasst wird.

Des Weiteren kann eine Richtungsabhängigkeit der Sensorpixelwerte des reflektierten Bereichs durch ein Computergrafikmodell berücksichtigt werden.

In der Abbildung Ref kann eine leichte übliche Konvexität einer Fläche 21 in vertikaler Richtung bzw. 22 in beiden horizontalen Richtungen angesetzt und berücksichtigt werden, indem man ansetzt, dass ein etwas größerer Bereich als der eingezeichnete Bereich 31 über die Fläche in die Kamera 10 reflektiert wird. Ferner kann durch Refl berücksichtigt werden, dass verschiedene Frequenzen üblich verschieden stark reflektiert werden.

Es kann weiter eine Abhängigkeit der Reflexion von der Polarisation des Lichtes berücksichtigt werden unter Berücksichtigung einer Mittelung von Reflexionsformeln für übliche Lacke. Außerdem kann über übliche Mikrostrukturierungen gemittelt werden.

Es ist auch denkbar, die Reflexionseigenschaften an erfasste Witterungszustände anzupassen, so ist beispielsweise im Herbst oder bei Schneematsch mit einer stärkeren Verschmutzung des erfassten Objekts zu rechnen. Eine näherungsweise Anpassung erfolgt beispielsweise über einen entsprechenden Vorfaktor.

Bei der Ermittlung des Reflexionsanteils der Farbdatenwerte ist es vorteilhaft, wenn es sich bei dem in der Fläche reflektierten Bereich 31 um eine trockene Straße handelt. Derartige Bereiche weisen selbst üblicherweise nur einen geringen Reflexionsanteil auf, so dass ihre Farbdatenwerte vergleichsweise unverfälscht sind. Reflexionsanteile von Straßen nehmen im Regelfall nur bei Eisbildung und/oder bei starker Nässe und Pfützenbildung kritische Werte an.

Dabei handelt es sich um witterungsbedingte Sonderfälle, welche eine vergleichsweise untergeordnete Rolle spielen. Sie können in erster Näherung vernachlässigt werden oder durch bekannte technische Systeme erkannt werden und die Berechnung des Reflexionsanteils gegebenenfalls ausgesetzt werden. Weitere Phänomene wie beispielsweise Luftreflexionen sind im Allgemeinen bei nicht zu flachem Blickwinkel der Kamera vernachlässigbar.

Die Bestimmung der Parameter der Näherungsfunktion I_refl_N erfolgt vorzugsweise mittels bekannter Verfahren zur Bestimmung des globalen Minimums oder mindestens eines geeigneten lokalen Minimums einer Fehlerfunktion im betrachten Bereich. Ein Beispiel für eine Fehlerfunktion ist

$$Ea\,(a1, a2, a3) =$$
$$[\,R\_rB - R(\,Ref\,(\,I\_refl\_N(f, a1, a2, a3)\,)\,)\,]2 +$$
$$[\,G\_rB - G(\,Ref\,(\,I\_refl\_N(f, a1, a2, a3)\,)\,)\,]2 +$$
$$[\,B\_rB - B(\,Ref\,(\,I\_refl\_N(f, a1, a2, a3)\,)\,)\,]2 \,.$$

Bei der Bestimmung eines Minimums sind die Randbedingungen der Parameter wie z.B. nicht-negative Höhe der Gaußfunktion zu berücksichtigen. Wenn die Abbildungen R, G und B in guter Näherung als Formeln vorliegen, können diese hierbei direkt verwendet werden. Andernfalls können die Werte R(...), G(...) und B(...) näherungsweise z.B. nach Berechnung der zu Ref(I_refl_N) bzgl. einer Funktionennorm nächsten vorab gespeicherten Stützfunktionen, für die R, G und B gespeichert sind, unter Verwendung z.B. von Interpolationen ermittelt werden. Zur Suche des globalen Minimums bzw. eines möglichst kleinen Wertes von Ea können z.B. Gradientenabstiegsverfahren eingesetzt werden. Dies liefert Zahlenwerte für a1, a2 und a3.

Unter Verwendung der vorliegenden RGB-Werte R_ges, G_ges, B_ges zur unbekannten Intensitätsdichte I_ges(f) werden die noch nicht bestimmten Parameter b1,..., b3 der Funktion I_O_N(f) näherungsweise ermittelt. Die Ermittlung erfolgt beispielsweise durch ein Gradientenabstiegsverfahren angewendet auf eine Fehlerfunktion oder ein Iterationsverfahren. Eine geeignete Fehlerfunktion hierfür ist beispielsweise:

$$Eb\,(b1, b2, b3) =$$

$$[ R\_ges - R( Abb ( I\_O\_N(f, b1, b2, b3), I\_refl\_N(f) ) ) ]2 +$$

$$[ G\_ges - G( Abb ( I\_O\_N(f, b1, b2, b3), I\_refl\_N(f) ) ) ]2 +$$

$$[ B\_ges - B( Abb ( I\_O\_N(f, b1, b2, b3), I\_refl\_N(f) ) ) ]2$$

bzw. mit der Näherung I_ges_N(f) = I_O_N(f) + I_refl_N(f)

$$Eb (b1, b2, b3) =$$

$$[ R\_ges - R( I\_O\_N(f, b1, b2, b3) + I\_refl\_N(f) ) ]2 +$$

$$[ G\_ges - G( I\_O\_N(f, b1, b2, b3) + I\_refl\_N(f) ) ]2 +$$

$$[ B\_ges - B( I\_O\_N(f, b1, b2, b3) + I\_refl\_N(f) ) ]2$$

wiederum bei Beachtung der Randbedingungen für die Parameter wie nichtnegative Höhe der Gaußfunktion etc.. Aus dem Minimierungsverfahren ergeben sich Zahlenwerte für b1, b2 und b3.

Die ermittelten Parameterwerte a1,...,a3, b1,...,b3 können als ein Beitrag zur Wiedererkennung von Objekten an anderen Orten zu anderen Zeiten verwendet werden, indem die extrahierten Parameterwerte verglichen werden zusammen mit weiteren extrahierten Objektmerkmalen. Bei diesem Vergleich können in erster Näherung die Werte a1, a2 und a3 unberücksichtigt bleiben. Die Parameter b1, b2 und b3 kodieren Informationen über die Farbe der jeweiligen Fläche. Anstelle b1, b2 und b3 können auch die daraus berechenbaren zugehörigen genäherten RGB-Werte R(I_O_N), G(I_O_N) und B(I_O_N) oder andere Farbraumwerte wie HSV (hue, saturation, value) verwendet werden. Speziell bei der Verwendung von Gaußfunktionen ist denkbar, dass in seltenen Fällen die Höhe der resultierenden Gaußfunktion von I_O_N null sein kann und R(I_refl_N)>R_ges, G(I_refl_N)>G_ges und B(I_refl_N)>B_ges gilt. Auftreten kann dies bei hohem Verschmutzungsgrad einer Fläche, weil dann der Reflexionsanteil i.allg. niedriger ist als üblich. Die Farbdatenwerte werden dann gekennzeichnet als unsicher und die Hypothese ‚wenig reflektierende Oberfläche' wird gestellt. In solchen Fällen kann ein geringerer Wert für den Reflexionsanteil I_refl_N verwendet werden, z.B. indem die Funktion mit einem, der kleiner als eins ist, multipliziert wird, so dass R(positiven Vorfaktor I_refl_N) <= R_ges, G(I_refl_N) <= G_ges und B(I_refl_N) <= B_ges gilt, wobei z.B. so gewählt wird, dass gilt R(I_refl_N)=R_ges oder G( I_refl_N)=G_ges oder B(I_refl_N)=B_ges. Dann wird I_O_N i. allg. positiv und R(L_O_N), G(I_O_N) bzw. B(I_O_N) ebenfalls. Z.B. im Farbraum HSV kann dann der Wert H (hue) als eine Schätzung des Farbtons verwendet werden.

In speziellen Fällen wie z.B. bei Ausbildung der Kamera 10 mit linearem Matrixsensor und/oder bei Vernachlässigung bestimmter Effekte vereinfachen sich obige Rechnungen z. T. deutlich.

Eine bevorzugte Möglichkeit für eine Vereinfachung der Rechnungen ist die Ausbildung der Kamera 10 derart, dass die verschiedenen Sensoren näherungsweise auf disjunkte Frequenzbänder sensitiv sind.

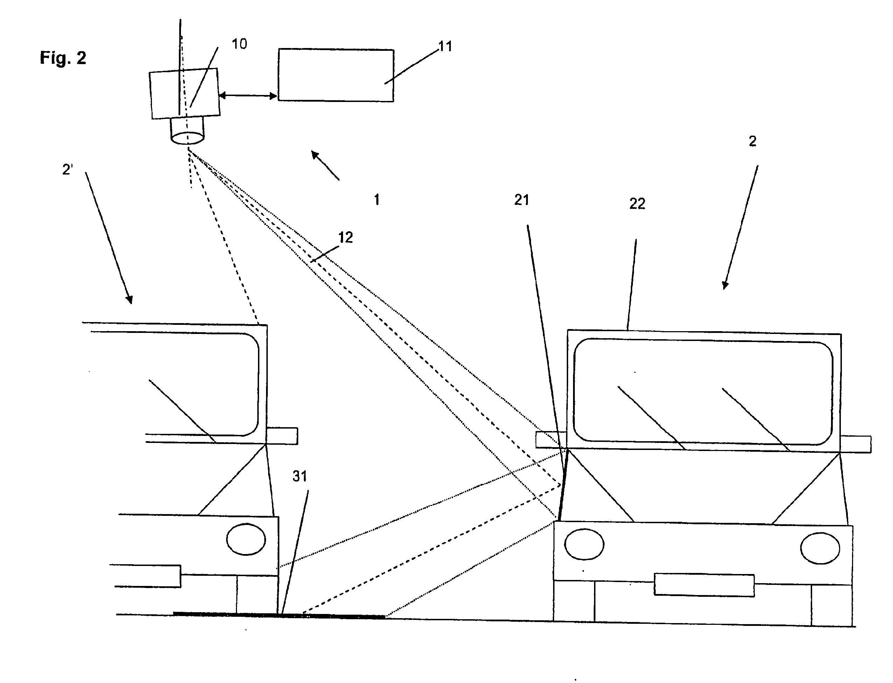

Das Verfahren kann für mehr und für weniger Frequenzkanäle eingesetzt werden. Beispielsweise kann zusätzlich ein IR-Kanal verwendet werden. Die Anzahl der Parameter M pro Funktion kann in dem Falle z.B. als 4 gewählt werden, d.h. komplexere Funktionen können dann verwendet werden. Im Straßenverkehr ist ein Objekt 2 bei Überwachung durch eine Kamera aus ausreichender Höhe und bei ausreichend steilem Blickwinkel im Regelfall isoliert wahrnehmbar. Wenn ein derartiger Blickwinkel nicht erreicht werden kann, sind Situationen wie die beispielhaft in Fig. 2 dargestellte denkbar. Dort ist eine Verkehrsituation mit zwei Objekten 2, 2' dargestellt. Für gleiche Elemente wurden dabei gleiche Bezugszeichen verwendet. Der Bereich 31 der Fahrbahn wird weiterhin teilweise von der Seitenfläche 21 des Objekts 2 in die Kamera 10 reflektiert. Dieser Bereich 31 ist jedoch für die Kamera 10 nicht sichtbar, da er von dem weiteren Objekt 2' verdeckt wird. In derartigen Situationen ist der Sensorpixelwert für den Bereich 31 nicht direkt aus dem Abbild ermittelbar. Insbesondere in solchen Fällen ist die Dachfläche als Bereich zur Ermittlung von Sensorpixeldaten sinnvoll.

Jedoch kann in einigen derartigen Fällen dennoch die Seitenfläche verwendet werden, nämlich wenn die Hypothese des Bereichs 31 über die Hypothese des Bereichs 21 in die Kamera reflektiert wird; dann kann eine Korrektur des Reflexionsanteils durchgeführt werden, indem Sensorpixelwerte aus zeitlich benachbarten Abbildern des Bereichs 31 verwendet werden unter Berücksichtigung von Wissen über gegebenenfalls vorhandene Schattenverläufe. Die Detektion von Schatten kann mit bekannten Verfahren durchgeführt werden, vgl. "Untersuchungen zu einer systematischen Leistungssteigerung in der modellbasierten Bildfolgenauswertung" (H. Leuck, Berichte aus der Informatik, Shaker Verlag, Aachen 2001).

Die Wahrscheinlichkeit, dass ein reflektierter Bereich der Fahrbahn durch einen weiteren Verkehrsteilnehmer verdeckt wird, sinkt, je näher der Bereich am Fahrzeug liegt. Näher am Fahrzeug liegende Straßenbereiche werden im Regelfall im unteren Teil der Seitenfläche 21 reflektiert. In derartigen Fällen kann der betrachtete Abschnitt der Seitenfläche 21 auf einen unteren Abschnitt beschränkt werden bzw. die Dachfläche 22 verwendet werden. Bei Verwendung der Dachfläche wird berücksichtigt, dass Dachluken im vorderen Teil vorhanden sein können. Für die entsprechenden Bereiche der Dachhypothese - unter Berücksichtigung einer üblichen, leicht konvexen Krümmung des Daches - werden Sensorpixelwerte extrahiert.

Die Qualität des über eine Fläche gemittelten Sensorpixelwertes sinkt leicht mit abnehmender Fläche. Ein zu kleiner Bereich führt z.B. in seltenen Fällen aufgrund von mit Mustern verzierten Seitenflächen zu möglichen Fehlern. Ist nur ein so kleiner Bereich auswertbar, dass die Werte üblich deutliche Fehler aufweisen könnten, so wird ein entsprechendes Signal durch das Kamera-Rechner-System 1 generiert und diesen Daten wird in nachfolgenden Rechnungen für die Wiedererkennung ein entsprechend geringerer Zuverlässigkeitswert zugeordnet. Diese Daten erhalten dann eine niedrigere Gewichtung bei der Wiedererkennung, in die vorzugsweise weitere extrahierte Parameter einfließen, wie z.B. Fahrzeuglänge.

Es können ferner gezielt Ausschnitte aus einem reflektierten Bereich 31, wenn dieser teilweise durch Hypothesen anderer Objekte verdeckt wird, ausgespart werden.

Entspricht einer Seitenfläche 21 aufgrund eines sehr geringen Projektionswinkels b eine zu kleine Bildfläche und/oder weist sie aufgrund zu kleinen Projektionswinkels üblicherweise einen extrem hohen Reflexionsanteil auf, so sind andere Flächen, beispielsweise das Fahrzeugdach 22, für die Berechnung von Farbdatenwerten vorzuziehen. In nahezu horizontalen Flächen können sich bei flachem Blickwinkel der Kamera Bäume, Gebäude, etc. widerspiegeln, deren Farbdatenwerte ebenfalls näherungsweise gemittelt ermittelbar sind.

## Patentansprüche

1. Verfahren zur Verbesserung der Erkennung und/oder Wiedererkennung von Objekten in der Bildverarbeitung mittels mindestens eines Kamera-RechnerSystems, welches mit mindestens einer Kamera und mindestens einer Recheneinheit ausgebildet ist, wobei mit dem Kamera-Rechner-System mindestens ein Abbild einer Fläche eines Objekts erfasst und mindestens ein zugehöriger Kamerasensorpixelwert ermittelt wird,
   **dadurch gekennzeichnet, dass**
   mindestens ein Bereich (31) ermittelt wird, welcher über die Fläche in die Kamera (10) reflektiert wird,
   mindestens ein Sensorpixelwert des Bereichs (31) durch die Recheneinheit (11) ermittelt wird, wobei als Sensorpixelwert eine Zahlenmenge bezeichnet wird, die Sensorpixelausgabewerten entspricht, die nämlich mittels einer Schwarz-Weiß-Kamera und/oder Farbmatrixkamera und/oder Infrarot-Kamera ermittelt werden, ein Reflexionsanteil mindestens in Abhängigkeit von dem mindestens einen Sensorpixelwert des Bereichs (31) ermittelt wird und der Sensorpixelwert der Fläche um den Reflexionsanteil korrigiert wird.

2. Verfahren nach Anspruch 1, **dadurch gekennzeichnet, dass** ein Sensorpixelwert eine Zahlenmenge ist, welche Werten von Sensoren entspricht, die näherungsweise auf disjunkte Frequenzbereiche sensitiv sind.

3. Verfahren nach Anspruch 1 oder 2, **dadurch gekennzeichnet, dass** als Sensorpixelwert des Objekts (2) und/oder des Bereichs (31) mindestens ein gemittelter Sensorpixelwert gebildet wird, wobei mindestens über Sensorpixelwerte eines Teilbereiches eines Abbilds der Fläche und/oder des Bereichs (31) gemittelt wird.

4. Verfahren nach Anspruch 3, **dadurch gekennzeichnet, dass** der Teilbereich der Fläche mittig liegt.

5. Verfahren nach einem der vorangegangenen Ansprüche, **dadurch gekennzeichnet, dass** als Fläche eine Seitenfläche (21) und/oder Dachfläche (22) und/oder ein vorderer und/oder ein hinterer Teil des Daches des Objekts gewählt wird, wobei das Objekt ein Kraftfahrzeug ist.

6. Verfahren nach einem der vorangegangenen Ansprüche, **dadurch gekennzeichnet, dass** die Wahl des Flächenteiles und/oder die Ermittlung des Reflexionsanteils mindestens unter Berücksichtigung mindestens eines Blickwinkels erfolgt, unter welchem der reflektierte Bereich (31) auf dem Objekt (2) von der Kamera (10) erfasst wird, in Abhängigkeit vom Blickwinkel der Kamera (10) und/oder in Abhängigkeit vom Sonnenstand und/oder von erfassten Witterungsbedingungen.

7. Verfahren nach einem der vorangegangenen Ansprüche, **dadurch gekennzeichnet, dass** Oberflächeneigenschaften des Objekts (2) im Reflexionsanteil berücksichtigt werden.

8. Verfahren nach einem der vorangegangenen Ansprüche, **dadurch gekennzeichnet, dass** vor der Kamera (10) ein Spiegel angebracht ist, der mindestens einen Teil des Himmels auf einen Bereich des Kamerasensors lenkt, der nicht für die Verkehrsdatenextraktion benötigt wird.

9. Verfahren nach einem der vorangegangenen Ansprüche, **dadurch gekennzeichnet, dass** das Verfahren zur Erkennung von Objekten in einer Verkehrsüberwachung verwendet wird und/oder für eine Verkehrssimulation, Signalanlagensteuerung und/oder für einen Routenplanungsdienst.

10. Verfahren nach einem der vorangegangenen Ansprüche, **dadurch gekennzeichnet, dass** die für die Wiedererkennung von Objekten nötige initiale Reisezeitschätzung und Reisezeitintervallschätzung numerisch mit Hilfe einer Verkehrssimulation erfolgt, wobei unterhalb einer Schwellenwertgeschwindigkeit das Reisezeitintervall so groß gewählt wird, dass Reisezeiten, wie sie einem Stau entsprächen, enthalten sind, um auch bei Staus gut Fahrzeuge wieder erkennen zu können.

11. Verfahren nach einem der vorangegangenen Ansprüche, **dadurch gekennzeichnet, dass** eine Schätzung der zeitabhängigen üblichen Reisezeit berechnet wird, indem eine Mittelung über einige zeitlich benachbarte extrahierte Reisezeiten erfolgt.

12. Verfahren nach einem der vorangegangenen Ansprüche, **dadurch gekennzeichnet, dass** zur Ermittlung der gesamten gewichteten Abweichungen der verschiedenen Parameter von Objekten für die Fahrzeugwiedererkennung eine empirisch begründete Schätzung der Funktionen der empirischen Standardabweichungen der Parameter berücksichtigt wird, sowie eine empirisch begründete geschätzte Relevanz der einzelnen Parameter für die Wiedererkennung.

13. Verfahren nach einem der vorangegangenen Ansprüche, **dadurch gekennzeichnet, dass** die Optimierung der Parameter für die Wiedererkennung - wie Schwellenwerte - für -verschiedene Abstände der Kameras vereinfacht wird, indem Daten für einen Kameraabstand erhoben werden, und anschließend der Fall verschiedener Kameraabstände simuliert wird, indem man für Objekte derjenigen Kamera, die flussaufwärts gelegen ist, die initiale Reisezeitschätzung analytisch oder numerisch mit einer Verkehrssimulation durchführt für den realen Kameraabstand und für einen zweiten virtuellen gewünschten Abstand, und danach die an der Kamera flussabwärts ermittelten Objekte virtuell verschiebt gemäß der Differenz der geschätzten Reisezeiten.

14. Verfahren nach einem der vorangegangenen Ansprüche, **dadurch gekennzeichnet, dass** die Erfassung von Daten wie Farbdaten über die Objekte bei der Wiedererkennung von Objektfolgen.

15. Verfahren nach einem der vorangegangenen Ansprüche, **dadurch gekennzeichnet, dass** anstelle der mit Videodetektoren ermittelbaren Zeitlücke für eine Zeitlückensteuerung oder der ermittelbaren maximalen Aufstelllänge eine pro LSA-Umlauf zeitlich gemittelte Aufstelllänge oder diejenige, die zu einer definierten Zeit nach Beginn der Rotphase vorliegt, oder die detektierte Fahrzeugdichte etwa zu Beginn der Rotphase, berücksichtigt wird, um eine LSA-Steuerung durchzuführen.

16. Verfahren nach einem der vorangegangenen Ansprüche, **dadurch gekennzeichnet, dass** eine weiter verbesserte Netz- und/oder LSA-Steuerung erzielt wird, indem die Informationen über ermittelten Abstände, Geschwindigkeiten und Beschleunigungen der einzelnen Fahrzeuge vor einer LSA mitberücksichtigt werden.

17. Verfahren nach einem der vorangegangenen Ansprüche, **dadurch gekennzeichnet, dass** die aus der mittels Fahrzeugwiedererkennung berechneten Reisezeiten unter zu Hilfenahme von Fundamentaldiagrammen des Verkehrs und/oder mittels Verkehrssimulation verwendet werden, um eine Information über die Anzahl der Fahrzeuge im nicht-überwachten Gebiet und somit über die Fahrzeugdichte zu erzeugen.

18. Verfahren nach einem der vorangegangenen Ansprüche, **dadurch gekennzeichnet, dass** die Verkehrs- und Reisezeitinformationen Datenbanken und einem dynamischen Routingdienst zur Verfügung gestellt werden.

19. Verfahren nach einem der vorangegangenen Ansprüche, **dadurch gekennzeichnet, dass** die Routingsoftware in einer oder mehreren Zentrale(n) und/oder im Fahrzeug selbst enthalten ist.

**20.** Verfahren nach einem der vorangegangenen Ansprüche, **dadurch gekennzeichnet, dass** die Reisezeitinformationen der einzelnen Objekte, die Reisezeiten aufzeichnen können von diesen und/oder vom zentralen Routingdienst an ein lokales und/oder zentrales LSA-Steuerungssystem gesendet werden.

**21.** Verfahren nach einem der vorangegangenen Ansprüche, **dadurch gekennzeichnet, dass** Informationen, die Rückschlüsse über die Witterung enthalten an die Verkehrssteuerungs-/Routingsysteme und - oder von dort - an die Fahrzeugerkennungssoftware weitergeleitet werden.

**22.** Verfahren nach einem der vorangegangenen Ansprüche, **dadurch gekennzeichnet, dass** ein dynamisches Re-Routing mit Hilfe der aktuellen Reisezeitinformationen durchgeführt wird

**23.** Verfahren nach einem der vorangegangenen Ansprüche, **dadurch gekennzeichnet, dass** die Reisezeitinformationen in einer Verkehrssteuerung, die eine Lastabwurfstrategie beinhaltet, berücksichtigt werden.

**24.** Verfahren nach einem der vorangegangenen Ansprüche, **dadurch gekennzeichnet, dass** die Verkehrs- und Reisezeitinformationen mit einer Verkehrssimulation für eine Korridorsteuerung, zwischen zwei Punkten einer Stadt, eingesetzt werden.

**25.** Verfahren nach einem der vorangegangenen Ansprüche, **dadurch gekennzeichnet, dass** die genannten Verkehrssteuerungsinformationen zur Verbesserung eines dynamischen Re-Routings verwendet werden.

**26.** Verfahren nach einem der vorangegangenen Ansprüche, **dadurch gekennzeichnet, dass** für Gruppen von Fahrzeugen beim dynamischen Re-Routing berücksichtigt wird, dass die Gruppe möglichst gar nicht oder nicht mehr als einen bestimmten Abstand getrennt werden soll.

**27.** Verfahren nach einem der vorangegangenen Ansprüche, **dadurch gekennzeichnet, dass** Verkehrssteuerungssysteme wie LSA-Steuerungssysteme via Funk den Fahrzeugen mit entsprechender Empfangsvorrichtung Informationen, über die verbleibende Dauer der Rotphase, Staus, Störfälle, Informationen über Ziele, freien Parkraum und/oder Werbung mitteilen, und dass vom Fahrzeug aus mittels Funk Parkraum reserviert/bezahlt und/oder Waren/Dienstleistungen gekauft werden können.

**28.** Verfahren nach einem der vorangegangenen Ansprüche, **dadurch gekennzeichnet, dass** Fahrzeuge mit Sonderrechten LSA-Steuerungssystemen Informationen senden, dass sie an eine LSA heranfahren, welchen Zielort sie haben und welche Route sie verwenden möchten.

**29.** Verfahren nach einem der vorangegangenen Ansprüche, **dadurch gekennzeichnet, dass** elektronische Informationssysteme an der Straße und Informationen an XFCD-Fahrzeuge eine konzertierte Verkehrssteuerung zusammen mit den LSA-Steuerungen und Geschwindigkeitsbegrenzungssignalanlagen durchführen.

**30.** Verfahren nach einem der vorangegangenen Ansprüche, **dadurch gekennzeichnet, dass** mittels einer Verkehrssimulation gemäß Anspruch 16 jedoch mit einer stochastischen Simulation vorab der Verkehr simuliert wird, insbesondere ob in einem Abschnitt ein Stau zu erwarten ist.

**31.** Verfahren nach einem der vorangegangenen Ansprüche, **dadurch gekennzeichnet, dass**, nachdem durch einen Nutzer eines Navigationssystems eine Route gewählt wurde, die Route an ein Verkehrssteuerungs-/Routingsystem übermittelt wird.

**32.** Verfahren nach einem der vorangegangenen Ansprüche, **dadurch gekennzeichnet, dass** die durch die Fahrzeugwiedererkennung ermittelten Reisezeitinformationen und/oder daraus durch Verkehrssimulation prognostizierten Reisezeitinformationen einem elektronischen Mautsystem zur Verfügung gestellt werden.

**33.** Verfahren nach einem der vorangegangenen Ansprüche, **dadurch gekennzeichnet, dass** das Routingsystem, dass auf den beschriebenen Verkehrsdaten beruht, erweitert wird, indem, bei einem Unfall und/oder Notfall mittels Funk den Routingdiensten und/oder anderen XFCD-Fahrzeugen mitgeteilt wird, was wo benötigt wird oder die Daten von Sonderfahrzeugen berücksichtigt werden.

**34.** Vorrichtung zur Verbesserung der Erkennung und/oder Wiedererkennung von Objekten in der Bildverarbeitung umfassend mindestens ein Kamera-Rechner-System, welches mit mindestens einer Kamera und mindestens einer Recheneinheit ausgebildet ist, wobei mit dem Kamera-Rechner-System mindestens ein Abbild einer Fläche eines Objekts erfassbar und mindestens ein zugehöriger Kamerasensorpixelwert ermittelbar ist, **dadurch gekennzeichnet, dass** mindestens ein Bereich (31) ermittelt durch die Recheneinheit (11) ermittelbar ist, welcher über die Fläche in die Kamera (10) reflektiert wird, mindestens ein Sensorpixelwert des Bereichs (31) durch die Recheneinheit (11) ermittelbar ist, wobei als Sensorpixelwert eine Zahlenmenge bezeichnet wird, die Sensorpixelausgabewerten entspricht, die nämlich mittels einer Schwarz-Weiß-Kamera und/oder Farbmatrixkamera und/oder Infrarot-Kamera ermittelt werden, ein Reflexionsanteil mindestens in Abhängigkeit von dem mindestens einen Sensorpixelwert des Bereichs (31) ermittelbar ist und der Sensorpixelwert der Fläche um den Reflexionsanteil korrigierbar ist

35. Vorrichtung nach Anspruch 34, **dadurch gekennzeichnet, dass** ein Sensorpixelwert eine Zahlenmenge ist, welche Werten von Sensoren entspricht, die näherungsweise auf disjunkte Frequenzbereiche sensitiv sind.

36. Vorrichtung nach Anspruch 34 oder 35, **dadurch gekennzeichnet, dass** als Sensorpixelwert des Objekts (2) und/oder des Bereichs (31) mindestens ein mittlerer Sensorpixelwert bildbar ist, wobei mindestens über Sensorpixelwerte eines Teilbereich eines Abbilds der Fläche und/oder des Bereichs (31) gemittelt wird.

37. Vorrichtung nach Anspruch 36, **dadurch gekennzeichnet, dass** der Teilbereich der Fläche mittig liegt.

38. Vorrichtung nach einem der Ansprüche 34 bis 37, **dadurch gekennzeichnet, dass** als Fläche eine Seitenfläche (21) und/oder Dachfläche (22) und/oder ein vorderer und/oder ein hinterer Teil des Daches des Objekts gewählt wird, wobei das Objekt ein Kraftfahrzeug ist.

39. Vorrichtung nach einem der Ansprüche 34 bis 38, **dadurch gekennzeichnet, dass** die Wahl des Flächenteiles und/oder die Ermittlung des Reflexionsanteils mindestens unter Berücksichtigung mindestens eines Blickwinkels erfolgt, unter welchem der reflektierte Bereich (31) auf dem Objekt (2) von der Kamera (10) erfasst wird, in Abhängigkeit vom Blickwinkel der Kamera und/oder in Abhängigkeit vom Sonnenstand und/oder von erfasste Witterungsbedingungen.

40. Vorrichtung nach einem der Ansprüche 34 bis 39, **dadurch gekennzeichnet, dass** übliche Oberflächeneigenschaften des Objekts (2) im Reflexionsanteil berücksichtigt werden.

41. Vorrichtung nach einem der Ansprüche 34 bis 40, **dadurch gekennzeichnet, dass** die Kamera (10) mit einem Spiegel ausgebildet ist, der mindestens einen Teil des Himmels auf einen Bereich des Kamerasensors abbildet, der nicht für die Verkehrsdatenextraktion benötigt wird.

42. Vorrichtung nach einem der Ansprüche 34 bis 41, **dadurch gekennzeichnet, dass** die Vorrichtung Bestandteil einer Vorrichtung zur Verkehrsüberwachung ist und/oder Bestandteil einer Verkehrssimulation, einer Signalanlagensteuerung und/oder eines Routenplanungsdienstes.

43. Vorrichtung nach einem der Ansprüche 34 bis 42, **dadurch gekennzeichnet, dass** die für die Wiedererkennung von Objekten nötige initiale Reisezeitschätzung und Reisezeitintervallschätzung numerisch mit Hilfe einer Verkehrssimulation erfolgt, wobei unterhalb einer Schwellenwertgeschwindigkeit das Reisezeitintervall so groß gewählt wird, dass Reisezeiten, wie sie einem Stau entsprächen, enthalten sind, um auch bei Staus gut Fahrzeuge wieder erkennen zu können.

44. Vorrichtung nach einem der Ansprüche 34 bis 43, **dadurch gekennzeichnet, dass** eine Schätzung der zeitabhängigen üblichen Reisezeit berechnet wird, indem eine Mittelung über einige zeitlich benachbarte extrahierte Reisezeiten erfolgt

45. Vorrichtung nach einem der Ansprüche 34 bis 44, **dadurch gekennzeichnet, dass** zur Ermittlung der gesamten gewichteten Abweichungen der verschiedenen Parameter von Objekten für die Fahrzeugwiedererkennung eine empirisch begründete der Schätzung Funktionen der empirischen Standardabweichungen der Parameter berücksichtigt wird, sowie eine empirisch begründete geschätzte Relevanz der einzelnen Parameter für die Wiedererkennung.

46. Vorrichtung nach einem der Ansprüche 34 bis 45, **dadurch gekennzeichnet, dass** die Optimierung der Parameter für die Wiedererkennung - wie Schwellenwerte - für verschiedene Abstände der Kameras vereinfacht wird, indem Daten für einen Kameraabstand erhoben werden, und anschließend der Fall verschiedener Kameraabstände simuliert wird, indem man für Objekte derjenigen Kamera, die flussaufwärts gelegen ist, die initiale Reisezeitschätzung analytisch oder numerisch mit einer Verkehrssimulation durchführt für den realen Kameraabstand und für einen zweiten virtuellen gewünschten Abstand, und danach die an der Kamera flussabwärts ermittelten Objekte virtuell verschiebt gemäß der Differenz der geschätzten Reisezeiten.

**47.** Vorrichtung nach einem der Ansprüche 34 bis 46, **dadurch gekennzeichnet, dass** die Erfassung von Daten wie Farbdaten über die Objekte bei der Wiedererkennung von Objektfolgen eingesetzt wird.

**48.** Vorrichtung nach einem der Ansprüche 34 bis 47, **dadurch gekennzeichnet, dass** anstelle der mit Videodetektoren ermittelbaren Zeitlücke für eine Zeitlückensteuerung oder der ermittelbaren maximalen Aufstelllänge eine pro LSA-Umlauf zeitlich gemittelte Aufstelllänge oder diejenige, die zu einer definierten Zeit nach Beginn der Rotphase vorliegt, oder die detektierte Fahrzeugdichte etwa zu Beginn der Rotphase, berücksichtigt wird, um eine LSA-Steuerung durchzuführen.

**49.** Vorrichtung nach einem der Ansprüche 34 bis 48, **dadurch gekennzeichnet, dass** eine weiter verbesserte Netz- und/oder LSA-Steuerung erzielt wird, indem die Informationen über ermittelten Abstände, Geschwindigkeiten und Beschleunigungen der einzelnen Fahrzeuge vor einer LSA mitberücksichtigt werden.

**50.** Vorrichtung nach einem der Ansprüche 34 bis 49, **dadurch gekennzeichnet, dass** die aus der mittels Fahrzeugwiedererkennung berechneten Reisezeiten unter zu Hilfenahme von Fundamentaldiagrammen des Verkehrs und/oder mittels Verkehrssimulation verwendet werden, um eine Information über die Anzahl der Fahrzeuge im nichtüberwachten Gebiet und somit über die Fahrzeugdichte zu erzeugen.

**51.** Vorrichtung nach einem der Ansprüche 34 bis 50, **dadurch gekennzeichnet, dass** die Verkehrs- und Reisezeitinformationen Datenbanken und einem dynamischen Routingdienst zur Verfügung gestellt werden.

**52.** Vorrichtung nach einem der Ansprüche 34 bis 51, **dadurch gekennzeichnet, dass** die Routingsoftware in einer oder mehreren Zentrale(n) und/oder im Fahrzeug selbst enthalten ist.

**53.** Vorrichtung nach einem der Ansprüche 34 bis 52, **dadurch gekennzeichnet, dass** die Reisezeitinformationen der einzelnen Objekte, die Reisezeiten aufzeichnen können, von diesen und/oder vom zentralen Routingdienst an ein lokales und/oder zentrales LSA-Steuerungssystem gesendet werden.

**54.** Vorrichtung nach einem der Ansprüche 34 bis 53, **dadurch gekennzeichnet, dass** Informationen die Rückschlüsse über die Witterung enthalten, an die Verkehrssteuerungs-/Routingsysteme und - oder von dort - an die Fahrzeugerkennungssoftware weitergeleitet werden. !!

**55.** Vorrichtung nach einem der Ansprüche 34 bis 54, **dadurch gekennzeichnet, dass** ein dynamisches Re-Routing mit Hilfe der aktuellen Reisezeitinformationen durchgeführt wird.

**56.** Vorrichtung nach einem der Ansprüche 34 bis 55, **dadurch gekennzeichnet, dass** die Reisezeitinformationen in einer Verkehrssteuerung, die eine Lastabwurfstrategie beinhaltet, berücksichtigt werden.

**57.** Vorrichtung nach einem der Ansprüche 34 bis 56, **dadurch gekennzeichnet, dass** die Verkehrs- und Reisezeitinformationen mit einer Verkehrssimulation für eine Korridorsteuerung, zwischen zwei Punkten einer Stadt, eingesetzt werden.

**58.** Vorrichtung nach einem der Ansprüche 34 bis 57, **dadurch gekennzeichnet, dass** die genannten Verkehrssteuerungsinformationen zur Verbesserung eines dynamischen Re-Routings verwendet werden.

**59.** Vorrichtung nach einem der Ansprüche 34 bis 58, **dadurch gekennzeichnet, dass** für Gruppen von Fahrzeugen beim dynamischen Re-Routing berücksichtigt wird, dass die Gruppe möglichst gar nicht oder nicht mehr als einen bestimmten Abstand getrennt werden soll.

**60.** Vorrichtung nach einem der Ansprüche 34 bis 59, **dadurch gekennzeichnet, dass** Verkehrssteuerungssysteme wie LSA-Steuerungssysteme den Fahrzeugen mit entsprechender Empfangsvorrichtung Informationen, über die verbleibende Dauer der Rotphase, Staus, Störfälle, Informationen über Ziele, freien Parkraum und/oder Werbung mitteilen, und dass vom Fahrzeug aus mittels Funk Parkraum reserviert/bezahlt und/oder Waren/Dienstleistungen gekauft werden können.

61. Vorrichtung nach einem der Ansprüche 34 bis 61, **dadurch gekennzeichnet, dass** Fahrzeuge mit Sonderrechten LSA-Steuerungssystemen Informationen senden, dass sie an eine LSA heranfahren, welchen Zielort sie haben und welche Route sie verwenden möchten.

62. Vorrichtung nach einem der Ansprüche 34 bis 61, **dadurch gekennzeichnet, dass** elektronische Informationssysteme an der Straße und Informationen an XFCD-Fahrzeuge eine konzertierte Verkehrssteuerung zusammen mit den LSA-Steuerungen und Geschwindigkeitsbegrenzungssignalanlagen durchführen

63. Vorrichtung nach einem der Ansprüche 34 bis 62, **dadurch gekennzeichnet, dass** mittels einer Verkehrssimulation gemäß Anspruch 49 jedoch mit einer stochastischen Simulation vorab der Verkehr simuliert wird, insbesondere ob in einem Abschnitt ein Stau zu erwarten ist.

64. Vorrichtung nach einem der Ansprüche 34 bis 63, **dadurch gekennzeichnet, dass**, nachdem durch einen Nutzer eines Navigationssystems eine Route gewählt wurde, die Route an ein Verkehrssteuerungs-/Routingsystem übermittelt wird.

65. Verfahren nach einem der Ansprüche 34 bis 64, **dadurch gekennzeichnet, dass** die durch die Fahrzeugwiedererkennung ermittelten Reisezeitinformationen und/oder daraus durch Verkehrssimulation prognostizierten Reisezeitinformationen einem elektronischen Mautsystem zur Verfügung gestellt werden.

66. Vorrichtung nach einem der Ansprüche 34 bis 65, **dadurch gekennzeichnet, dass** das Routingsystem, dass auf den beschriebenen Verkehrsdaten beruht, erweitert wird, indem, bei einem Unfall und/oder Notfall mittels Funk den Routingdiensten und/oder anderen XFCD-Fahrzeugen mitgeteilt wird, was wo benötigt wird oder die Daten von Sonderfahrzeugen berücksichtigt werden.

## Claims

1. Method for improving identification and/or recognition of objects in image processing by means of at least one camera-computer system which is configured with at least one camera and at least one computer unit, at least one image of a face of an object being detected by the camera-computer system and at least one associated camera sensor pixel value being determined,
   **characterised in that**
   at least one region (31) is determined which is reflected via the face into the camera (10),
   at least one sensor pixel value of the region (31) is determined by the computer unit (11), a numerical quantity being designated as sensor pixel value which corresponds to sensor pixel output values which are actually determined by means of a black and white camera and/or colour matrix camera and/or infrared camera,
   a reflection component being determined at least as a function of the at least one sensor pixel value of the region (31) and the sensor pixel value of the face being corrected by the reflection component.

2. Method according to claim 1, **characterised in that** a sensor pixel value is a numerical quantity which corresponds to values of sensors which are sensitive in an approximate manner to disjunct frequency ranges.

3. Method according to claim 1 or 2, **characterised in that** at least one averaged sensor pixel value is formed as sensor pixel value of the object (2) and/or of the region (31), averaging taking place at least over sensor pixel values of a partial region of an image of the face and/or of the region (31).

4. Method according to claim 3, **characterised in that** the partial region of the face is situated centrally.

5. Method according to one of the preceding claims, **characterised in that** a side face (21) and/or roof face (22) and/or a front and/or a rear part of the roof of the object is chosen as face, the object being an automotive vehicle.

6. Method according to one of the preceding claims, **characterised in that** the choice of the face part and/or the determination of the reflection component is effected at least taking into account at least one viewing angle, at which the reflected region (31) on the object (2) is detected by the camera (10), as a function of the viewing angle of the camera (10) and/or as a function of the position of the sun and/or of detected weather conditions.

7. Method according to one of the preceding claims, **characterised in that** the surface properties of the object (2) are taken into account in the reflection component.

8. Method according to one of the preceding claims, **characterised in that** a mirror is mounted in front of the camera (10) which directs at least a part of the sky onto a region of the camera sensor which is not required for the traffic data extraction.

9. Method according to one of the preceding claims, **characterised in that** the method for identification of objects is used in traffic monitoring and/or for traffic simulation, for signal unit control and/or for a route planning service.

10. Method according to one of the preceding claims, **characterised in that** the initial travel time estimation and travel time interval estimation which are required for recognition of objects is effected numerically with the help of a traffic simulation, the travel time interval being chosen large enough, beneath a threshold value speed, that travel times as would correspond to a traffic jam are obtained, in order to be able to recognise vehicles readily even in the case of traffic jams.

11. Method according to one of the preceding claims, **characterised in that** an estimation of the time-dependent normal travel time is calculated by averaging over several temporally adjacent extracted travel times.

12. Method according to one of the preceding claims, **characterised in that**, in order to determine the overall weighted deviations of the various parameters of objects for vehicle recognition, an empirically-based estimation of the functions of the empirical standard deviations of the parameters is taken into account and also an empirically-based estimated relevance of the individual parameters for recognition.

13. Method according to one of the preceding claims, **characterised in that** the optimisation of the parameters for recognition - such as threshold values - for various spacings of the cameras is facilitated **in that** data for a camera spacing are ascertained and subsequently the case of various camera spacings is simulated by implementing the initial travel time estimation analytically or numerically for objects of those cameras which are situated upstream with a traffic simulation for the actual camera spacing and for a second virtual desired spacing, and thereafter objects detected downstream on the camera are virtually shifted according to the difference of the estimated travel times.

14. Method according to one of the preceding claims, **characterised in that** the detection of data such as colour data relating to the objects is used during recognition of object sequences.

15. Method according to one of the preceding claims, **characterised in that** instead of the time gaps which can be detected by video detectors for a time gap control or instead of the maximum set length which can be determined, a set length which is temporally averaged per LSA cycle or that which is present at a defined time after the start of the red phase, or the detected vehicle density for instance at the start of the red phase is taken into account in order to implement an LSA control.

16. Method according to one of the preceding claims, **characterised in that** a further improved network- and/or LSA control is achieved **in that** information relating to determined spacings, speeds and accelerations of the individual vehicles is also taken into account in front of an LSA.

17. Method according to one of the preceding claims, **characterised in that** the travel times calculated by means of vehicle recognition using fundamental diagrams of the traffic and/or by means of traffic simulation are used in order to produce information relating to the number of vehicles in the non-monitored area and hence relating to the vehicle density.

18. Method according to one of the preceding claims, **characterised in that** the traffic- and travel time information is made available to data banks and to a dynamic routing service.

19. Method according to one of the preceding claims, **characterised in that** the routing software is contained in one or more central office(s) and/or in the vehicle itself.

20. Method according to one of the preceding claims, **characterised in that** the travel time information of the individual objects, which can record travel times, are transmitted by the latter and/or by the central routing service to a local and/or central LSA control system.

21. Method according to one of the preceding claims, **characterised in that** information which contains conclusions relating to the weather is forwarded to the traffic control-/routing systems and - or from there - to the vehicle identification software.

22. Method according to one of the preceding claims, **characterised in that** a dynamic re-routing system is implemented with the help of the current travel time information.

23. Method according to one of the preceding claims, **characterised in that** the travel time information is taken into account in a traffic control which has a load relief strategy.

24. Method according to one of the preceding claims, **characterised in that** the traffic- and travel time information is used with a traffic simulation for a corridor control, between two points of a town.

25. Method according to one of the preceding claims, **characterised in that** the mentioned traffic control information is used for improving a dynamic re-routing.

26. Method according to one of the preceding claims, **characterised in that**, during dynamic re-routing for groups of vehicles, it is taken into account that the group is intended as far as possible not to be separated at all, or by no more than a specific distance.

27. Method according to one of the preceding claims, **characterised in that** traffic control systems such as LSA control systems inform via radio the vehicles with a corresponding receiving device with information relating to the remaining duration of the red phase, traffic jams, accidents, information relating to destinations, available parking space and/or advertising, and **in that** a parking space can be reserved/paid for and/or goods/services can be purchased by radio from a vehicle.

28. Method according to one of the preceding claims, **characterised in that** vehicles with specially privileged LSA control systems transmit information that they are approaching an LSA, what their destination is and which route they would like to use.

29. Method according to one of the preceding claims, **characterised in that** electronic information systems on the road and information on XFCD vehicles implement a concerted traffic control together with the LSA controls and speed restriction signal units.

30. Method according to one of the preceding claims, **characterised in that**, by means of a traffic simulation according to claim 16, but with a stochastic simulation, the traffic is simulated in advance, in particular as to whether a traffic jam is to be expected in one section.

31. Method according to one of the preceding claims, **characterised in that**, after a route has been chosen by a user of a navigation system, the route is transmitted to a traffic control-/routing system.

32. Method according to one of the preceding claims, **characterised in that** the travel time information determined by the vehicle recognition and/or travel time information predicted therefrom by traffic simulation is made available to an electronic toll system.

33. Method according to one of the preceding claims, **characterised in that** the routing system which is based on the described traffic data is extended **in that**, in the case of an accident and/or an emergency, the routing services and/or other XFCD vehicles are informed by radio what is required where or the data are taken into account by special vehicles.

34. Device for improving identification and/or recognition of objects in image processing comprising at least one camera-computer system which is configured with at least one camera and at least one computer unit, at least one image of a face of an object being able to be detected by the camera-computer system and at least one associated camera sensor pixel value being able to be determined,

**characterised in that**
at least one region (31) determined by the computer unit (11) can be determined, which is reflected via the face into the camera (10),
at least one sensor pixel value of the region (31) can be determined by the computer unit (11), a numerical quantity being designated as sensor pixel value which corresponds to sensor pixel output values which are actually determined by means of a black and white camera and/or colour matrix camera and/or infrared camera,
a reflection component can be determined at least as a function of the at least one sensor pixel value of the region (31) and the sensor pixel value of the face can be corrected by the reflection component.

35. Device according to claim 34, **characterised in that** a sensor pixel value is a numerical quantity which corresponds to values of sensors which are sensitive in an approximate manner to disjunct frequency ranges.

36. Device according to claim 34 or 35, **characterised in that** at least one average sensor pixel value can be formed as sensor pixel value of the object (2) and/or of the region (31), averaging taking place at least over sensor pixel values of a partial region of an image of the face and/or of the region (31).

37. Device according to claim 36, **characterised in that** the partial region of the face is situated centrally.

38. Device according to one of the claims 34 to 37, **characterised in that** a side face (21) and/or roof face (22) and/or a front and/or a rear part of the roof of the object is chosen as face, the object being an automotive vehicle.

39. Device according to one of the claims 34 to 38, **characterised in that** the choice of the face part and/or the determination of the reflection component is effected at least taking into account at least one viewing angle, at which the reflected region (31) on the object (2) is detected by the camera (10), as a function of the viewing angle of the camera (10) and/or as a function of the position of the sun and/or of detected weather conditions.

40. Device according to one of the claims 34 to 39, **characterised in that** normal surface properties of the object (2) are taken into account in the reflection component.

41. Device according to one of the claims 34 to 40, **characterised in that** the camera (10) is configured with a mirror which images at least a part of the sky onto a region of the camera sensor which is not required for the traffic data extraction.

42. Device according to one of the claims 34 to 41, **characterised in that** the device is a component of a device for traffic monitoring and/or a component of a traffic simulation, of a signal unit control and/or of a route planning service.

43. Device according to one of the claims 34 to 42, **characterised in that** the initial travel time estimation and travel time interval estimation which are required for recognition of objects is effected numerically with the help of a traffic simulation, the travel time interval being chosen large enough, beneath a threshold value speed, that travel times as would correspond to a traffic jam are obtained, in order to be able to recognise vehicles readily even in the case of traffic jams.

44. Device according to one of the claims 34 to 43, **characterised in that** an estimation of the time-dependent normal travel time is calculated by averaging over several temporally adjacent extracted travel times.

45. Device according to one of the claims 34 to 44, **characterised in that**, in order to determine the overall weighted deviations of the various parameters of objects for vehicle recognition, an empirically-based estimation of the functions of the empirical standard deviations of the parameters is taken into account and also an empirically-based estimated relevance of the individual parameters for recognition.

46. Device according to one of the claims 34 to 45, **characterised in that** the optimisation of the parameters for recognition - such as threshold values - for various spacings of the cameras is facilitated **in that** data for a camera spacing are ascertained and subsequently the case of various camera spacings is simulated by implementing the initial travel time estimation analytically or numerically for objects of those cameras which are situated upstream with a traffic simulation for the actual camera spacing and for a second virtual desired spacing, and thereafter objects detected downstream on the camera are virtually shifted according to the difference of the estimated travel times.

47. Device according to one of the claims 34 to 46, **characterised in that** the detection of data such as colour data relating to the objects is used during recognition of object sequences.

48. Device according to one of the claims 34 to 47, **characterised in that** instead of the time gaps which can be detected by video detectors for a time gap control or instead of the maximum set length which can be determined, a set length which is temporally averaged per LSA cycle or that which is present at a defined time after the start of the red phase, or the detected vehicle density for instance at the start of the red phase is taken into account in order to implement an LSA control.

49. Device according to one of the claims 34 to 48, **characterised in that** a further improved network- and/or LSA control is achieved **in that** information relating to determined spacings, speeds and accelerations of the individual vehicles is also taken into account in front of an LSA.

50. Device according to one of the claims 34 to 49, **characterised in that** the travel times calculated by means of vehicle recognition using fundamental diagrams of the traffic and/or by means of traffic simulation are used in order to produce information relating to the number of vehicles in the non-monitored area and hence relating to the vehicle density.

51. Device according to one of the claims 34 to 50, **characterised in that** the traffic- and travel time information is made available to data banks and to a dynamic routing service.

52. Device according to one of the claims 34 to 51, **characterised in that** the routing software is contained in one or more central office(s) and/or in the vehicle itself.

53. Device according to one of the claims 34 to 52, **characterised in that** the travel time information of the individual objects, which can record travel times, are transmitted by the latter and/or by the central routing service to a local and/or central LSA control system.

54. Device according to one of the claims 34 to 53, **characterised in that** information which contains conclusions relating to the weather is forwarded to the traffic control-/routing systems and - or from there - to the vehicle identification software.

55. Device according to one of the claims 34 to 54, **characterised in that** a dynamic re-routing system is implemented with the help of the current travel time information.

56. Device according to one of the claims 34 to 55, **characterised in that** the travel time information is taken into account in a traffic control which has a load relief strategy.

57. Device according to one of the claims 34 to 56, **characterised in that** the traffic- and travel time information is used with a traffic simulation for a corridor control, between two points of a town.

58. Device according to one of the claims 34 to 57, **characterised in that** the mentioned traffic control information is used for improving a dynamic re-routing.

59. Device according to one of the claims 34 to 58, **characterised in that**, during dynamic re-routing for groups of vehicles, it is taken into account that the group is intended as far as possible not to be separated at all, or by no more than a specific distance.

60. Device according to one of the claims 34 to 59, **characterised in that** traffic control systems such as LSA control systems inform the vehicles with a corresponding receiving device with information relating to the remaining duration of the red phase, traffic jams, accidents, information relating to destinations, available parking space and/or advertising, and **in that** a parking space can be reserved/paid for and/or goods/services can be purchased by radio from a vehicle.

61. Device according to one of the claims 34 to 61, **characterised in that** vehicles with specially privileged LSA control systems transmit information that they are approaching an LSA, what their destination is and which route they would like to use.

62. Device according to one of the claims 34 to 61, **characterised in that** electronic information systems on the road and information on XFCD vehicles implement a concerted traffic control together with the LSA controls and speed restriction signal units.

63. Device according to one of the claims 34 to 62, **characterised in that**, by means of a traffic simulation according to claim 49, but with a stochastic simulation, the traffic is simulated in advance, in particular as to whether a traffic jam in one section is to be expected.

64. Device according to one of the claims 34 to 63, **characterised in that**, after a route has been chosen by a user of a navigation system, the route is transmitted to a traffic control-/routing system.

65. Device according to one of the claims 34 to 64, **characterised in that** the travel time information determined by the vehicle recognition and/or travel time information predicted therefrom by traffic simulation is made available to an electronic toll system.

66. Device according to one of the claims 34 to 65, **characterised in that** the routing system which is based on the described traffic data is extended **in that**, in the case of an accident and/or an emergency, the routing services and/or other XFCD vehicles are informed by radio what is required where or the data are taken into account by special vehicles.

## Revendications

1. Procédé pour améliorer la détection et/ou la reconnaissance d'objets dans le traitement d'images au moyen d'au moins un système caméra-ordinateur, lequel est composé d'au moins une caméra et d'au moins une unité de calcul, dans lequel, avec le système caméra-ordinateur, au moins une image d'une surface d'un objet est détectée et au moins une valeur pixel associée de détection par la caméra est déterminée,
   **caractérisé en ce que**
   au moins une zone (31) est déterminée, laquelle est, sur la surface, réfléchie dans la caméra (10),
   au moins une valeur pixel de détection de la zone (31) est établie par l'unité de calcul (11), la valeur pixel de détection désignant une quantité de nombres qui correspond aux valeurs de sortie pixel de détection, lesquelles sont déterminées en particulier au moyen d'une caméra noir et blanc et/ou une caméra matricielle couleur et/ou une caméra infrarouge, une part de réflexion est déterminée au moins en fonction de la au moins une valeur pixel de détection de la zone (31) et la valeur pixel de détection de la surface est corrigée au niveau de la part de réflexion.

2. Procédé selon la revendication 1, **caractérisé en ce qu'**une valeur pixel de détection est une quantité de nombres, laquelle correspond à des valeurs de capteurs qui sont de manière approximative sensibles à des gammes de fréquences disjointes.

3. Procédé selon la revendication 1 ou 2, **caractérisé en ce qu'**au moins une valeur pixel moyenne de détection est constituée comme valeur pixel de détection de l'objet (2) et/ou de la zone (31), la moyenne étant réalisée au moins sur les valeurs pixel de détection d'une zone partielle d'une image de la surface et/ou de la zone (31).

4. Procédé selon la revendication 3, **caractérisé en ce que** la zone partielle de la surface se trouve centrée.

5. Procédé selon l'une quelconque des revendications précédentes, **caractérisé en ce qu'**une surface latérale (21) et/ou une surface du toit (22) et/ou une partie avant et/ou une partie arrière du toit de l'objet est sélectionnée, l'objet étant une automobile.

6. Procédé selon l'une quelconque des revendications précédentes, **caractérisé en ce que** le choix de la partie de surface et/ou la détermination de la part de réflexion s'effectue au moins en tenant compte d'au moins un angle de vision, selon lequel la zone réfléchie (31) est détectée sur l'objet (2) par la caméra (10), en fonction de l'angle de vision de la caméra (10) et/ou en fonction de la position du soleil et/ou des conditions atmosphériques enregistrées.

7. Procédé selon l'une quelconque des revendications précédentes, **caractérisé en ce que** les propriétés de la surface de l'objet (2) sont prises en compte dans la part de réflexion.

8. Procédé selon l'une quelconque des revendications précédentes, **caractérisé en ce qu'**un miroir est installé devant la caméra (10), lequel guide au moins une partie du ciel sur une zone du capteur de caméra qui n'est pas nécessaire pour l'extraction des données de circulation.

9. Procédé selon l'une quelconque des revendications précédentes, **caractérisé en ce que** le procédé est utilisé pour la détection d'objets dans une surveillance de la circulation et/ou pour une simulation de la circulation, un contrôle des dispositifs de signalisation et/ou pour un service de planification des parcours.

10. Procédé selon l'une quelconque des revendications précédentes, **caractérisé en ce que** l'estimation initiale nécessaire du temps de parcours pour la reconnaissance d'objets et l'estimation de l'intervalle de temps de parcours s'effectue de manière numérique à l'aide d'une simulation de la circulation, sachant qu'au-dessous d'une vitesse seuil, l'intervalle de temps de parcours est choisi élevé, de telle sorte que les temps de parcours, tels qu'ils correspondent à un embouteillage, sont compris de façon à pouvoir à nouveau bien détecter les véhicules également lors d'embouteillages.

11. Procédé selon l'une quelconque des revendications précédentes, **caractérisé en ce qu'**est calculée une estimation du temps de parcours habituel à dépendance chronologique, une moyenne étant réalisée par quelques temps de parcours extraits voisins dans le temps.

12. Procédé selon l'une quelconque des revendications précédentes, **caractérisé en ce que**, afin de déterminer l'ensemble des écarts pondérés des différents paramètres d'objets pour la reconnaissance de véhicule, une estimation, fondée de manière empirique, des caractéristiques des écarts-types empiriques des paramètres est prise en compte, ainsi qu'une importance estimative, fondée de manière empirique, de chaque paramètre pour la reconnaissance.

13. Procédé selon l'une quelconque des revendications précédentes, **caractérisé en ce que** l'optimisation des paramètres pour la reconnaissance (comme les valeurs seuil) est simplifiée pour différentes distances des caméras, les données étant relevées pour une distance de caméra, et ensuite le cas des différentes distances de caméra est simulé, l'estimation initiale du temps de parcours étant réalisée pour les objets de chaque caméra, qui se trouve en amont, de façon analytique ou numérique avec une simulation de la circulation pour la distance réelle de caméra et pour une seconde distance virtuelle souhaitée, et par la suite les objets trouvés en amont au niveau de la caméra étant virtuellement déplacés conformément à la différence des temps de parcours estimés.

14. Procédé selon l'une quelconque des revendications précédentes, **caractérisé en ce que** l'enregistrement de données telles que les données chromatiques concernant les objets est mis en oeuvre lors de la reconnaissance de suites d'objets.

15. Procédé selon l'une quelconque des revendications précédentes, **caractérisé en ce que**, au lieu de l'intervalle de temps pouvant être déterminé par un détecteur vidéo pour un contrôle des intervalles de temps ou de la longueur de file maximale pouvant être déterminée, une longueur de file moyennée dans le temps pour chaque cycle de signalisation lumineuse ou celle qui existe à un temps défini après le commencement du temps de rouge, ou la densité en véhicules détectée environ au commencement du temps de rouge, est prise en compte pour réaliser un contrôle de l'installation de signalisation lumineuse.

16. Procédé selon l'une quelconque des revendications précédentes, **caractérisé en ce qu'**un contrôle encore amélioré du réseau et/ou de l'installation de signalisation lumineuse est réalisé, les informations concernant les distances, les vitesses et les accélérations déterminées pour chaque véhicule étant prises en compte devant une installation de signalisation lumineuse.

17. Procédé selon l'une quelconque des revendications précédentes, **caractérisé en ce que** les temps de parcours calculés à partir de la reconnaissance des véhicules sont utilisés à l'aide de diagrammes fondamentaux de la circulation et/ou au moyen d'une simulation de circulation, pour générer une information sur le nombre de véhicules dans la zone non surveillée et par conséquent sur la densité en véhicules.

18. Procédé selon l'une quelconque des revendications précédentes, **caractérisé en ce que** les informations concernant la circulation et les temps de parcours sont mises à la disposition de banques de données et d'un service de routage dynamique.

19. Procédé selon l'une quelconque des revendications précédentes, **caractérisé en ce que** le logiciel de routage est compris dans un ou plusieurs centraux et/ou dans le véhicule lui-même.

**20.** Procédé selon l'une quelconque des revendications précédentes, **caractérisé en ce que** les informations sur les temps de parcours de chaque objet, lequel peut enregistrer les temps de parcours, sont envoyées par celui-ci et/ou par le service de routage centralisé à un système de commande de l'installation de signalisation lumineuse local et/ou centralisé.

**21.** Procédé selon l'une quelconque des revendications précédentes, **caractérisé en ce que** des informations, qui contiennent des conclusions sur les intempéries, sont communiquées aux systèmes de contrôle de la circulation/de routage et - ou à partir de ceux-ci - au logiciel de détection de véhicules.

**22.** Procédé selon l'une quelconque des revendications précédentes, **caractérisé en ce qu'**un re-routage dynamique est réalisé à l'aide des dernières informations concernant les temps de parcours.

**23.** Procédé selon l'une quelconque des revendications précédentes, **caractérisé en ce que** les informations concernant les temps de parcours sont prises en compte dans un contrôle de la circulation qui comprend une stratégie de délestage.

**24.** Procédé selon l'une quelconque des revendications précédentes, **caractérisé en ce que** les informations concernant la circulation et les temps de parcours sont utilisées avec une simulation de la circulation pour un contrôle de couloir, entre deux points d'une ville.

**25.** Procédé selon l'une quelconque des revendications précédentes, **caractérisé en ce que** les informations de contrôle de la circulation mentionnées sont utilisées pour l'amélioration d'un re-routage dynamique.

**26.** Procédé selon l'une quelconque des revendications précédentes, **caractérisé en ce que**, pour des groupes de véhicules dans le cas d'un re-routage dynamique, est pris en compte le fait que le groupe doive le plus possible n'être aucunement séparé ou ne pas être séparé de plus d'une distance définie.

**27.** Procédé selon l'une quelconque des revendications précédentes, **caractérisé en ce que**, par radio, les systèmes de contrôle de la circulation, tels que les systèmes de commande de l'installation de signalisation lumineuse, communiquent aux véhicules dotés d'un dispositif de réception correspondant des informations sur la durée restante du temps de rouge, les embouteillages, les incidents, des informations sur les points d'arrivée, une place de parking libre et/ou de la publicité, et **en ce que**, du véhicule, au moyen de la radio, une place de parking peut être réservée/payée et/ou des prestations de service/marchandises peuvent être achetées.

**28.** Procédé selon l'une quelconque des revendications précédentes, **caractérisé en ce que** des véhicules dotés de droits spéciaux envoient aux systèmes de commande de l'installation de signalisation lumineuse des informations sur le fait qu'ils s'approchent d'une installation de signalisation lumineuse, sur leur destination et sur la route qu'ils souhaitent emprunter.

**29.** Procédé selon l'une quelconque des revendications précédentes, **caractérisé en ce que** des systèmes d'information électroniques au niveau de la rue et des informations au niveau des véhicules XFCD réalisent ensemble un contrôle de la circulation concerté avec les commandes de l'installation de signalisation lumineuse et les installations de signalisation de limitation de la vitesse.

**30.** Procédé selon l'une quelconque des revendications précédentes, **caractérisé en ce que**, au moyen d'une simulation de la circulation selon la revendication 16, la circulation est en outre simulée avec au préalable une simulation stochastique, en particulier si un embouteillage est attendu sur une portion.

**31.** Procédé selon l'une quelconque des revendications précédentes, **caractérisé en ce que**, lorsqu'une route est sélectionnée par un utilisateur d'un système de navigation, la route est communiquée à un système de contrôle de la circulation/de routage.

**32.** Procédé selon l'une quelconque des revendications précédentes, **caractérisé en ce que** les informations concernant les temps de parcours déterminées par la reconnaissance de véhicules et/ou de ce fait les informations concernant les temps de parcours pronostiquées par la simulation de la circulation sont mises à la disposition d'un système de péage électronique.

**33.** Procédé selon l'une quelconque des revendications précédentes, **caractérisé en ce que** le système de routage qui repose sur les données de circulation décrites est étendu, le lieu de l'incident, lors d'un accident et/ou d'une urgence, étant communiqué par radio aux services de routage et/ou à d'autres véhicules XFCD, ou les données étant prises en compte par des véhicules spéciaux.

**34.** Dispositif pour améliorer la détection et/ou la reconnaissance d'objets dans le traitement d'images comprenant au moins un système caméra-ordinateur, lequel est composé d'au moins une caméra et d'au moins une unité de calcul, dans lequel, avec le système caméra-ordinateur, au moins une image d'une surface d'un objet peut être détectée et au moins une valeur pixel de détection associée peut être déterminée,
**caractérisé en ce que**
au moins une zone (31) déterminée par l'unité de calcul (11) peut être déterminée, laquelle est, sur la surface, réfléchie dans la caméra (10),
au moins une valeur pixel de détection de la zone (31) peut être établie par l'unité de calcul (11), la valeur pixel de détection désignant une quantité de nombres qui correspond aux valeurs de sortie pixel de détection, lesquelles sont déterminées en particulier au moyen d'une caméra noir et blanc et/ou une caméra matricielle couleur et/ou une caméra infrarouge,
une part de réflexion peut être déterminée au moins en fonction de la au moins une valeur pixel de détection de la zone (31) et la valeur pixel de détection de la surface peut être corrigée au niveau de la part de réflexion.

**35.** Dispositif selon la revendication 34, **caractérisé en ce qu'**une valeur pixel de détection est une quantité de nombres, laquelle correspond à des valeurs de capteurs qui sont de manière approximative sensibles à des gammes de fréquences disjointes.

**36.** Dispositif selon la revendication 34 ou 35, **caractérisé en ce qu'**au moins une valeur pixel moyenne de détection peut être constituée comme valeur pixel de détection de l'objet (2) et/ou de la zone (31), la moyenne étant réalisée au moins sur les valeurs pixel de détection d'une zone partielle d'une image de la surface et/ou de la zone (31).

**37.** Dispositif selon la revendication 36, **caractérisé en ce que** la zone partielle de la surface se trouve centrée.

**38.** Dispositif selon l'une quelconque des revendications 34 à 37, **caractérisé en ce qu'**une surface latérale (21) et/ou une surface du toit (22) et/ou une partie avant et/ou une partie arrière du toit de l'objet est sélectionnée, l'objet étant une automobile.

**39.** Dispositif selon l'une quelconque des revendications 34 à 38, **caractérisé en ce que** le choix de la partie de surface et/ou la détermination de la part de réflexion s'effectue au moins en tenant compte d'au moins un angle de vision, selon lequel la zone réfléchie (31) est détecté sur l'objet (2) par la caméra (10), en fonction de l'angle de vision de la caméra et/ou en fonction de la position du soleil et/ou des conditions atmosphériques enregistrées.

**40.** Dispositif selon l'une quelconque des revendications 34 à 39, **caractérisé en ce que** les propriétés de la surface de l'objet (2) sont prises en compte dans la part de réflexion.

**41.** Dispositif selon l'une quelconque des revendications 34 à 40, **caractérisé en ce que** la caméra (10) est formée d'un miroir, lequel reproduit au moins une partie du ciel sur une zone du capteur de caméra qui n'est pas nécessaire pour l'extraction des données de circulation.

**42.** Dispositif selon l'une quelconque des revendications 34 à 41, **caractérisé en ce que** le dispositif fait partie d'un dispositif pour la surveillance de la circulation et/ou partie d'une simulation de la circulation, d'un contrôle des dispositifs de signalisation et/ou d'un service de planification des parcours.

**43.** Dispositif selon l'une quelconque des revendications 34 à 42, **caractérisé en ce que** l'estimation initiale nécessaire du temps de parcours pour la reconnaissance d'objets et l'estimation de l'intervalle de temps de parcours s'effectue de manière numérique à l'aide d'une simulation de la circulation, sachant qu'au-dessous d'une vitesse seuil, l'intervalle de temps de parcours est choisi élevé, de telle sorte que les temps de parcours, tels qu'ils correspondent à un embouteillage, sont compris de façon à pouvoir à nouveau bien détecter les véhicules également lors d'embouteillages.

**44.** Dispositif selon l'une quelconque des revendications 34 à 43, **caractérisé en ce qu'**est calculée une estimation du temps de parcours habituel à dépendance chronologique, une moyenne étant réalisée par quelques temps de parcours extraits voisins dans le temps.

**45.** Dispositif selon l'une quelconque des revendications 34 à 44, **caractérisé en ce que**, afin de déterminer l'ensemble des écarts pondérés des différents paramètres d'objets pour la reconnaissance de véhicule, une estimation, fondée de manière empirique, des caractéristiques des écarts-types empiriques des paramètres est prise en compte, ainsi qu'une importance estimative, fondée de manière empirique, de chaque paramètre pour la reconnaissance.

**46.** Dispositif selon l'une quelconque des revendications 34 à 45, **caractérisé en ce que** l'optimisation des paramètres pour la reconnaissance (comme les valeurs seuil) est simplifiée pour différentes distances des caméras, les données étant relevées pour une distance de caméra, et ensuite le cas des différentes distances de caméra est simulé, l'estimation initiale du temps de parcours étant réalisée pour les objets de chaque caméra, qui se trouve en amont, de façon analytique ou numérique avec une simulation de la circulation pour la distance réelle de caméra et pour une seconde distance virtuelle souhaitée, et par la suite les objets trouvés en amont au niveau de la caméra étant virtuellement déplacés conformément à la différence des temps de parcours estimés.

**47.** Dispositif selon l'une quelconque des revendications 34 à 46, **caractérisé en ce que** l'enregistrement de données telles que les données chromatiques concernant les objets est mis en oeuvre lors de la reconnaissance de suites d'objets.

**48.** Dispositif selon l'une quelconque des revendications 34 à 47, **caractérisé en ce que**, au lieu de l'intervalle de temps pouvant être déterminé par un détecteur vidéo pour un contrôle des intervalles de temps ou de la longueur de file maximale pouvant être déterminée, une longueur de file moyennée dans le temps pour chaque cycle de signalisation lumineuse ou celle qui existe à un temps défini après le commencement du temps de rouge, ou la densité en véhicules détectée environ au commencement du temps de rouge, est prise en compte pour réaliser un contrôle de l'installation de signalisation lumineuse.

**49.** Dispositif selon l'une quelconque des revendications 34 à 48, **caractérisé en ce qu'**un contrôle encore amélioré du réseau et/ou de l'installation de signalisation lumineuse est réalisé, les informations concernant les distances, les vitesses et les accélérations déterminées pour chaque véhicule étant prises en compte devant une installation de signalisation lumineuse.

**50.** Dispositif selon l'une quelconque des revendications 34 à 49, **caractérisé en ce que** les temps de parcours calculés à partir de la reconnaissance des véhicules sont utilisés à l'aide de diagrammes fondamentaux de la circulation et/ou au moyen d'une simulation de circulation, pour générer une information sur le nombre de véhicules dans la zone non surveillée et par conséquent sur la densité en véhicules.

**51.** Dispositif selon l'une quelconque des revendications 34 à 50, **caractérisé en ce que** les informations concernant la circulation et les temps de parcours sont mises à la disposition de banques de données et d'un service de routage dynamique.

**52.** Dispositif selon l'une quelconque des revendications 34 à 51, **caractérisé en ce que** le logiciel de routage est compris dans un ou plusieurs centraux et/ou dans le véhicule lui-même.

**53.** Dispositif selon l'une quelconque des revendications 34 à 52, **caractérisé en ce que** les informations sur les temps de parcours de chaque objet, lequel peut enregistrer les temps de parcours, sont envoyées par celui-ci et/ou par le service de routage centralisé à un système de commande de l'installation de signalisation lumineuse local et/ou centralisé.

**54.** Dispositif selon l'une quelconque des revendications 34 à 53, **caractérisé en ce que** des informations, qui contiennent des conclusions sur les intempéries, sont communiquées aux systèmes de contrôle de la circulation/de routage et - ou à partir de ceux-ci - au logiciel de détection de véhicules.

**55.** Dispositif selon l'une quelconque des revendications 34 à 54, **caractérisé en ce qu'**un re-routage dynamique est réalisé à l'aide des dernières informations concernant les temps de parcours.

**56.** Dispositif selon l'une quelconque des revendications 34 à 55, **caractérisé en ce que** les informations concernant les temps de parcours sont prises en compte dans un contrôle de la circulation qui comprend une stratégie de délestage.

**57.** Dispositif selon l'une quelconque des revendications 34 à 56, **caractérisé en ce que** les informations concernant la circulation et les temps de parcours sont utilisées avec une simulation de la circulation pour un contrôle de couloir, entre deux points d'une ville.

58. Dispositif selon l'une quelconque des revendications 34 à 57, **caractérisé en ce que** les informations de contrôle de la circulation mentionnées sont utilisées pour l'amélioration d'un re-routage dynamique.

59. Dispositif selon l'une quelconque des revendications 34 à 58, **caractérisé en ce que**, pour des groupes de véhicules dans le cas d'un re-routage dynamique, est pris en compte le fait que le groupe doive le plus possible n'être aucunement séparé ou ne pas être séparé de plus d'une distance définie.

60. Dispositif selon l'une quelconque des revendications 34 à 59, **caractérisé en ce que** les systèmes de contrôle de la circulation, tels que les systèmes de commande de l'installation de signalisation lumineuse, communiquent aux véhicules dotés d'un dispositif de réception correspondant des informations sur la durée restante du temps de rouge, les embouteillages, les incidents, des informations sur les points d'arrivée, une place de parking libre et/ou de la publicité, et **en ce que**, du véhicule, au moyen de la radio, une place de parking peut être réservée/payée et/ou des prestations de service/marchandises peuvent être achetées.

61. Dispositif selon l'une quelconque des revendications 34 à 61, **caractérisé en ce que** des véhicules dotés de droits spéciaux envoient aux systèmes de commande de l'installation de signalisation lumineuse des informations sur le fait qu'ils s'approchent d'une installation de signalisation lumineuse, sur leur destination et sur la route qu'ils souhaitent emprunter.

62. Dispositif selon l'une quelconque des revendications 34 à 61, **caractérisé en ce que** des systèmes d'information électroniques au niveau de la rue et des informations au niveau des véhicules XFCD réalisent ensemble un contrôle de la circulation concerté avec les commandes de l'installation de signalisation lumineuse et les installations de signalisation de limitation de la vitesse.

63. Dispositif selon l'une quelconque des revendications 34 à 62, **caractérisé en ce que**, au moyen d'une simulation de la circulation selon la revendication 49, la circulation est en outre simulée avec au préalable une simulation stochastique, en particulier si un embouteillage est attendu sur une portion.

64. Dispositif selon l'une quelconque des revendications 34 à 63, **caractérisé en ce que**, lorsqu'une route est sélectionnée par un utilisateur d'un système de navigation, la route est communiquée à un système de contrôle de la circulation/de routage.

65. Dispositif selon l'une quelconque des revendications 34 à 64, **caractérisé en ce que** les informations concernant les temps de parcours déterminées par la reconnaissance de véhicules et/ou de ce fait les informations concernant les temps de parcours pronostiquées par la simulation de la circulation sont mises à la disposition d'un système de péage électronique.

66. Dispositif selon l'une quelconque des revendications 34 à 65, **caractérisé en ce que** le système de routage qui repose sur les données de circulation décrites est étendu, le lieu de l'incident, lors d'un accident et/ou d'une urgence, étant communiqué par radio aux services de routage et/ou à d'autres véhicules XFCD, ou les données étant prises en compte par des véhicules spéciaux.

Fig. 1

EP 1 489 552 B1

**Fig. 2**